# EUROPÄISCHE PATENTSCHRIFT

(11) **EP 4 033 744 B1**
(45) Veröffentlichungstag und Bekanntmachung des Hinweises auf die Patenterteilung: **08.05.2024**
(21) Anmeldenummer: 21152490.5
(22) Anmeldetag: 20.01.2021
(51) Int. Cl.: H04N 1/191, H04N 1/04

(54) **VORRICHTUNG UND VERFAHREN ZUM VERBESSERN DER REPRODUZIERBARKEIT VON AUFNAHMEN**
APPARATUS AND METHOD FOR IMPROVING THE REPRODUCIBILITY OF IMAGES
DISPOSITIF ET PROCÉDÉ D'AMÉLIORATION DE LA REPRODUCTIBILITÉ DES ENREGISTREMENTS

(43) Veröffentlichungstag der Anmeldung: 27.07.2022
(73) Patentinhaber: CI Tech Sensors AG, 3400 Burgdorf (CH)
(72) Erfinder: STÖCKLI, Armin, 3063 Ittigen (CH)
(74) Vertreter: Viering, Jentschura & Partner mbB Patent- und Rechtsanwälte

(56) Entgegenhaltungen:
- WO-A1-99/35618
- US-A1- 2002 093 694
- US-A1- 2005 045 809
- US-A1- 2005 161 583
- Seite ET AL: "I ndustrial Contact Image Sensor Bedienungsanleitung V 4.00", , 26. Juni 2017 (2017-06-26), XP055591501, Gefunden im Internet: URL:https://tichawa-vision.de/pdf/manual_d e.pdf [gefunden am 2019-05-23]

## Beschreibung

Die Erfindung betrifft eine Vorrichtung und ein Verfahren zum Verbessern der Reproduzierbarkeit von Aufnahmen, mittels denen ein Reduzieren oder Entfernen des Moiré-Effektes ermöglicht wird.

Der Moiré-Effekt ist ein optischer Effekt, bei dem durch Überlagerung von regelmäßigen Rastern bzw. Mustern ein wiederum periodisches Raster bzw. Muster entsteht, das spezielle Strukturen aufweist, die in keinem der Einzel-Raster vorhanden sind und bei Veränderung der Überlagerungsweise variieren. Dieser Effekt kann entstehen, wenn sich zumindest zwei Raster überlagern, die relativ fein ausgeführt sein können. Es handelt sich um eine Art optische Interferenz, durch die bestimmte Raster entstehen können, die in der Regel recht grob in ihrer Ausführung wirken. Der Moiré-Effekt kann mit einer optischen Täuschung verglichen werden. Der Moiré-Effekt kann in der Bildverarbeitung immer dann auftreten, wenn sich zwei oder mehr Raster überlagern, beispielsweise bei einem Erfassen zumindest einer Banknote mittels zumindest eines Bildsensors, wenn Motive mit einer regelmäßigen Struktur aufgenommen werden. Ein Bildsensor kann einzelne Bildpunkte ebenfalls anhand eines bestimmten Rasters aufzeichnen. Bei der Verarbeitung von Banknoten können drei regelmäßige Raster auftreten. Eine Banknote kann beispielsweise lokal parallele Linien aufweisen. Bei der Verarbeitung von Banknoten kann beispielsweise eine regelmäßige Abtastung in Transportrichtung stattfinden. Bei der Verarbeitung von Banknoten kann ferner beispielsweise eine regelmäßige Abtastung in Zeilenrichtung stattfinden. Durch die lokal parallelen Linien und die regelmäßige Abtastung in Transportrichtung kann ein Moiré-Effekt auftreten, wenn beispielsweise eine Abtastung lückenhaft ist. Durch die lokalen parallelen Linien und die regelmäßige Abtastung in Zeilenrichtung wird beispielsweise kein Moiré-Effekt erzeugt, wenn eine Abtastung in Zeilenrichtung keine, bzw. nur kleine, vernachlässigbare Lücken haben.

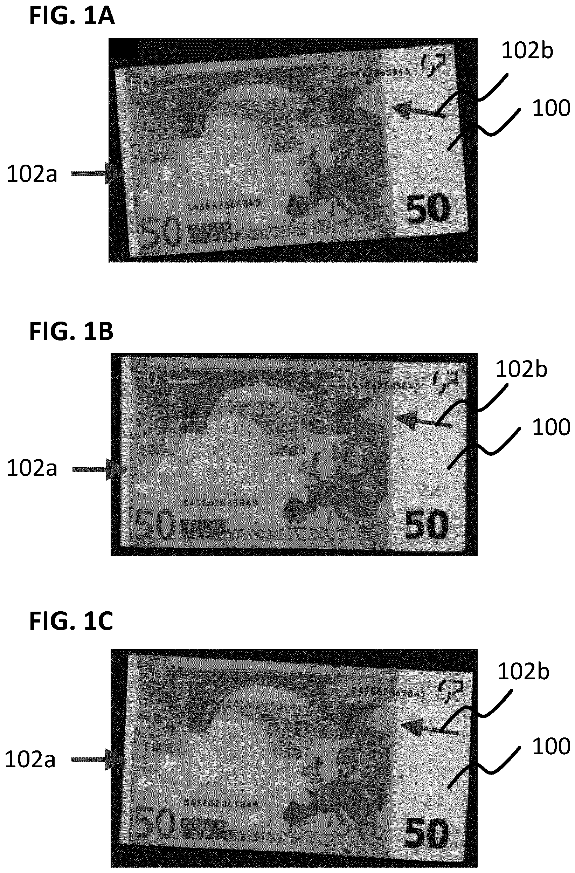

In den FIG. 1A, FIG. 1B und FIG. 1C ist jeweils eine (immer dieselbe) 50-Euro-Banknote 100 dargestellt, die mittels eines Bildsensors, beispielsweise mittels eines herkömmlichen Contact Image Sensors, in drei verschiedenen Positionen aufgenommen bzw. erfasst wurde. Eine 50-Euro-Banknote 100 hat beispielsweise unterhalb des darauf abgebildeten Brückenbogens, siehe die Pfeile 102a und 102b in den FIG. 1A, FIG. 1B, FIG. 1C, eine Mehrzahl von in eine Richtung verlaufenden Linienstrukturen. Wird die 50-Euro-Banknote 100 beispielsweise mittels eines Scanners bzw. Banknoten-Lesers bei einem Schrägzug, beispielsweise bei unterschiedlichen Winkeln zu einer Transportrichtung der 50-Euro-Banknote 100, und/oder mit unterschiedlichen Abtastungen aufgenommen kann der Moiré-Effekt als Wechselwirkung zwischen den auf dem Motiv befindlichen Strukturen und der Abtaststruktur, die zumindest ein Bildsensor, beispielsweise ein herkömmlicher Contact Image Sensor eines Scanners besitzt, in sehr unterschiedlichen Mustern entstehen (siehe beispielsweise die Pfeile 102a und 102b in den FIG. 1A, FIG. 1B und FIG. 1C). Aufgrund der unterschiedlichen Winkel oder kleiner Verschiebungen der Abtastung, in der die 50-Euro-Banknote 100 vom Bildsensor erfasst wird, bilden sich jeweils unterschiedliche ungewollte Moiré-Effekt Muster. Wird nun die 50-Euro-Banknote 100 mit einem feinen Muster aufgenommen, so beeinträchtigen sich die Raster der Aufnahme vom Bildsensor und das durch das feine Muster der Banknote entstehende Raster gegenseitig.

Die Unterschiede in den FIG. 1A, FIG. 1B und FIG. 1C treten vor allem wegen des unterschiedlichen in der Praxis oft vorhandenen Schrägzuges von Banknoten und/oder der unterschiedlichen Phasenlage des Abtastraster zu den periodischen Linien und einer zu kleinen Pixelfläche im Vergleich zum Abtastschritt auf. Prinzipiell können auch im Vergleich zum Abtastschritt zu große Pixel zu Moiré-Effekten führen.

Dies hat zu Folge, dass die Messungen nicht reproduzierbar sind, denn in bestimmten Regionen des aufgenommenen Bildes kann ein Punkt einmal als dunkel und ein anderes Mal als hell gemessen werden, selbst wenn sich die Aufnahmebedienungen wie Schrägzug oder unterschiedlichen Phasenlage des Abtastraster zu den periodischen Linien nur wenig ändern und somit nicht kontrolliert werden können. Ferner kann es passieren, dass RGB-Farbwerte nicht an derselben Position aufgrund eines Zeit-Multiplexverfahrens bei, beispielsweise 100 dots per inch (dpi, Punkte pro Inch) gemessen werden können, was zu einer verringerten Genauigkeit von Farbtonmessungen, beispielsweise zu Fleckenbildung im aufgenommenen Bild, führen kann. Auch kann ein Nyquist-Kriterium in eine Transportrichtung einer Banknote nicht erfüllt sein, beispielsweise bei einer Auflösung von 50 dpi, die bei verschiedenen Schrägzügen aufgenommen werden, was zu einer geringen Genauigkeit im Druckbereich führen kann. Folglich kann eine Reproduzierbarkeit von Bildaufnahmen, beispielsweise von Banknoten, nicht gewährleistet sein.

Hierzu wird verwiesen auf die WO 99/35618 A1, die Publikation "Industrial Contact Image Sensor Bedienungsanleitung V 4.00" von Seite et al, die US 2005/045809 A1, die US 2002/093694 A1 und die US 2005/161583 A1. WO 99/35618 A1 offenbart einen Währungsprüfer zum Bewerten von Banknoten aufweisend ein Gehäuse, das einen Einlass zum Empfangen von Banknoten, einen Abtastpfad, entlang dem eine empfangene Banknote zum Bewerten bewegt wird, und eine Antriebsanordnung kombiniert, die dem Abtastpfad zugeordnet ist. Scanner unterschiedlicher Art werden in entfernbaren Modulen bereitgestellt, wobei die Scanner und ihre Position durch Ersetzen des Moduls durch ein anderes Modul variiert werden können. Die US 2005/045809 A1 offenbart eine Fotosensorbaugruppe, die über mehrere Reihen von Fotosensoren verfügt, die sich ein Ladungsübertragungsregister teilen. Ladungen von einer Reihe von Fotosensoren werden durch eine andere Reihe von Fotosensoren zum Ladungsübertragungsregister übertragen, und Ladungen von beiden Reihen von Fotosensoren werden optional im Ladungsübertragungsregister addiert. Die Fotosensoren in den beiden Reihen können unterschiedliche Lichtsammelbereiche haben

Es besteht daher eine Nachfrage an einer Vorrichtung und an einem Verfahren zum Verbessern der Reproduzierbarkeit von Aufnahmen, welche in der Lage sind, einen ungewollten Moiré-Effekt beim Erfassen beispielsweise zumindest einer Banknote zu reduzieren oder sogar zu entfernen. Insbesondere soll mittels der Vorrichtung und des Verfahrens eine Moiré-freie Aufnahme beispielsweise von Banknoten ermöglicht werden. Ferner soll mittels der hierin beschriebenen Vorrichtung und des hierin beschriebenen Verfahrens durch eine Anpassung einer Abtastung in Transportrichtung eine Moiré-freie Aufnahme von Banknoten ermöglicht werden. Mittels der hierin beschriebenen Vorrichtung und des hierin beschriebenen Verfahrens soll eine Bildreproduzierbarkeit verbessert werden. Mittels der hierin beschriebenen Vorrichtung und des hierin beschriebenen Verfahrens soll eine Unabhängigkeit der Aufnahmebilder einer Banknote von unterschiedlichen Schrägzügen und/oder von unterschiedlichen Abtastorten erreicht werden. Mittels der hierin beschriebenen Vorrichtung und des hierin beschriebenen Verfahrens kann eine Mehrzahl von Aufnahmearten eingestellt werden. Mittels der hierin beschriebenen Vorrichtung und des hierin beschriebenen Verfahrens kann eine größere Abtastfläche erreicht werden. Mittels der hierin beschriebenen Vorrichtung und des hierin beschriebenen Verfahrens kann die Reproduzierbarkeit der Aufnahmen einer Banknote verbessert werden. Ferner kann mittels der hierin beschriebenen Vorrichtung und des hierin beschriebenen Verfahrens ein Signal-Rauschabstand verbessert werden.

Verschiedene erfindungsgemäße Ausführungsbeispiele stellen eine Vorrichtung und ein Verfahren zum Verbessern der Reproduzierbarkeit von Aufnahmen bereit. Die wichtigsten erfindungsgemäßen Ausführungsbeispiele und deren Weiterbildungen sind in den beigefügten unabhängigen Ansprüchen angegeben, von denen verschiedene Aspekte in den Figuren veranschaulicht sind. Sofern nicht ausdrücklich als erfindungsgemäße Ausführungsform angegeben, kann jede Ausführungsform in der Beschreibung einige, aber nicht notwendigerweise alle, Aspekte aufweisen, die sich in den Ansprüchen wiederfinden, und dient der Veranschaulichung.

In verschiedenen Ausführungsbeispielen kann die Lichtquelle in Bezug auf die Objektebene auf der gleichen (Auflichtmessung) und/oder der gegenüberliegenden (Durchlichtmessung) Seite wie die Bildebene sein. Die Durchlichtmessung kann eine Hell- und/oder Dunkelfeld-Konfiguration sein.

In verschiedenen Ausführungsbeispielen kann der lichtsensitive Zeilenpixel-Array zumindest einen Fotodioden-Zeilenpixel-Array aufweisen.

In verschiedenen Ausführungsbeispielen kann eine Anzahl von Zeilenpixel-Arrays kleiner als eine Anzahl von Pixel in jedem Zeilenpixel-Array sein.

In verschiedenen Ausführungsbeispielen kann ein Contact Image Sensor einen Zeilenpixel-Array mit beispielsweise etwa 800 Pixel in einer Zeile aufweisen und beispielsweise zwei Zeilen aufweisen.

In verschiedenen Ausführungsbeispielen kann das Objekt ein Wertpapier, beispielsweise eine Banknote oder ein Scheck sein.

In verschiedenen Ausführungsbeispielen kann die Vorrichtung ein Wertpapier-Leser, beispielsweise ein Banknoten- und/oder Scheck-Leser sein.

In verschiedenen Ausführungsbeispielen kann die Antriebsvorrichtung eine Mehrzahl von Rollen und zumindest einen Antriebsmotor aufweisen. Der Antriebsmotor kann eingerichtet sein, zumindest eine Rolle, beispielsweise eine Antriebsrolle, so anzutreiben, dass zumindest ein Objekt entlang der Transportrichtung auf der Führungsvorrichtung in der Objektebene angetrieben und mittels Führungsrollen transportiert werden kann.

In verschiedenen Ausführungsbeispielen kann die zumindest eine Lichtquelle eine lichtemittierende Diode (LED)-Lichtquelle sein, beispielsweise eine Monochrom-LED oder eine RGB-LED zur Farbausleuchtung eines Objektes in der Objektebene. In verschiedenen Ausführungsbeispielen kann die Lichtquelle eine Mehrzahl von Lichtquellen in einer Richtung senkrecht bzw. quer zu einer Transportrichtung aufweisen. In verschiedenen Ausführungsbeispielen kann die zumindest eine Lichtquelle zumindest einen Diodenstab mit Lichtauskopplung aufweisen.

In verschiedenen Ausführungsbeispielen kann die zumindest eine Lichtquelle als Lichtleiter mit Lichtauskopplung eingerichtet sein, der seitlich mit LEDs von verschiedener Wellenlänge gespeist werden kann.

In verschiedenen Ausführungsbeispielen kann eine Stablinse beispielsweise eine Zylinderlinse sein.

In verschiedenen Ausführungsbeispielen kann zumindest eine Stablinse als eine Gradienten-Index-Linse ausgebildet sein. In verschiedenen Ausführungsbeispielen kann zumindest eine Stablinse als eine Gradienten-Index-Stablinse ausgebildet sein. Die zumindest eine Stablinse kann eine zylindrische Form aufweisen, bei der die beiden Endflächen poliert und die Mantelfläche optisch nicht relevant sein kann.

In verschiedenen Ausführungsbeispielen kann eine Stablinse mit verschiedenen optischen Materialien erhältlich sein, beispielsweise mit Gläsern wie Quarzglas, aber auch mit kristallinen Materialien oder Plastik. Die Stablinsen können einen Durchmesser in einem Wertebereich von etwa 0,1 Millimetern bis 2 Millimetern und beispielsweise einen Längenbereich von 2 Millimetern bis 50 Millimetern, aufweisen. In verschiedenen Ausführungsbeispielen kann eine Stablinse zumindest einen einfachen Aufbau haben und eine einfache Handhabung ermöglichen und mittels verschiedener Beschichtungen beschichtet werden.

In verschiedenen Ausführungsbeispielen kann zumindest eine Stablinse als eine SELFOC^{®}-Mikrolinse eingerichtet sein, beispielsweise als eine flache Gradienten-Index-Linse. Die Brechungsindexänderung im Material kann herbei durch einen Ionenaustausch erzeugt werden. In verschiedenen Ausführungsbeispielen kann zumindest eine Linse als lineares angeordnetes Array von Gradienten-Index-Linsen oder als mehrere parallele Arrays eingerichtet sein

In verschiedenen Ausführungsbeispielen kann eine Stablinse einen Objekt-Streifen in der Objektebene auf einen Bild-Streifen in der Bildebene abbilden.

In verschiedenen Ausführungsbeispielen kann ein eindimensionaler Zeilenpixel-Array ein fotosensitiver CMOS-Array sein.

In verschiedenen Ausführungsbeispielen kann ein eindimensionaler Zeilenpixel-Array ein fotosensitiver CCD-Array sein.

In verschiedenen Ausführungsbeispielen kann der Contact Image Sensor und/oder der lichtempfindliche Zeilenpixel-Array ein kompaktes Design aufweisen mit einer Auflösung von bis zu etwa 600 dpi. Eine Auflösung eines Zeilenarrays kann mittels eines Pixel-Pitches ermittelt werden.

In verschiedenen Ausführungsbeispielen kann die Vorrichtung ferner ein Gehäuse aufweisen.

In verschiedenen Ausführungsbeispielen kann die zumindest eine Lichtquelle mittels einer Zeit-Multiplex-Beleuchtung betrieben werden. Anders ausgedrückt kann beispielsweise während eines ersten Zeitschritts mit der Farbe Blau beleuchtet werden, während eines zweiten Zeitschritts mit der Farbe Grün beleuchtet werden, während eines dritten Zeitschritts mit der Farbe Rot beleuchtet werden und während eines vierten Zeitschrittes mit Infrarot beleuchtet werden. Bei jedem Beleuchtungsschritt kann eine Zeile, beispielsweise eine CMOS-Zeile oder eine CCD-Zeile, zumindest einen Pixelwert messen und empfangene Daten analog oder digital beispielsweise zu einer Steuerungsvorrichtung und/oder in einen Speicher exportieren.

In verschiedenen Ausführungsbeispielen kann der Contact Image Sensor und/oder der lichtempfindliche Zeilenpixel-Array zumindest zwei lichtempfindlichen Zeilen aufweisen. Die zwei Zeilen können unabhängig voneinander oder gemeinsam, beispielsweise mittels einer Steuerungsvorrichtung, betrieben werden. Anders ausgedrückt, kann die Steuerungsvorrichtung eine erste Zeile mit einer Versorgungsspannung oder -strom versorgen und betreiben. Die Steuerungsvorrichtung kann eine zweite Zeile mit einer Versorgungsspannung oder -strom versorgen und betrieben. Die Steuerungsvorrichtung kann die erste und die zweite Zeile individuell betreiben. Die Steuerungsvorrichtung kann beispielsweise eine Zeile ausschalten bzw. auf ein Massepotential legen, um beispielsweise Energie einzusparen. Es können aber auch drei Zeilen, vier Zeilen, fünf Zeilen oder noch mehr Zeilen vorgesehen sein.

In verschiedenen Ausführungsbeispielen kann der Contact Image Sensor und/oder der lichtempfindliche Zeilenpixel-Array eine Auflösung von etwa 50 dpi oder 100 dpi oder 200 dpi aufweisen und in den unterschiedlichen Auflösungen betrieben werden.

In verschiedenen Ausführungsbeispielen kann eine Vorrichtung zumindest eine Mehrzahl von Contact Image Sensoren aufweisen, beispielsweise zumindest ein Paar von Contact Image Sensoren. Die Contact Image Sensoren können entlang einer Transportrichtung eines Objektes benachbart angeordnet sein. Die Contact Image Sensoren können jeweils eine derartige Breite aufweisen, dass sie jeweils ein zu untersuchendes Objekt, beispielsweise ein Scheck oder eine Banknote, vollständig erfassen bzw. abdecken. Das zumindest eine Paar von Contact Image Sensoren kann bei mittels eines Auflicht-Betriebs betreibbar sein.

In verschiedenen Ausführungsbeispielen kann der Contact Image Sensor und/oder der lichtempfindliche Zeilenpixel-Array eine Auflösung von etwa 100 dpi oder 200 dpi oder 300 dpi oder 600 dpi aufweisen und in den unterschiedlichen Auflösungen betrieben werden.

In verschiedenen Ausführungsbeispielen kann der Contact Image Sensor und/oder der lichtempfindliche Zeilenpixel-Array mittels eines analogen Binning-Verfahrens betrieben werden. Bei einem analogen Binning-Verfahren kann eine Ladung, welche in den Potentialtöpfen gesammelt ist, von einer Mehrzahl von Pixeln physikalisch zusammengefasst werden. Bei einem analogen Binning-Verfahren können Kapazitäten parallel geschaltet werden und beispielsweise von einer Steuerungsvorrichtung ausgelesen werden. In den hierin beschriebenen Vorrichtungen und Verfahren wird bevorzugt das analoge Binning-Verfahren verwendet. Mittels des analogen Binning-Verfahrens kann eine Datenreduktion erreicht werden, denn es müssen weniger Pixel ausgelesen werden. Ferner kann mittels des analogen Binning-Verfahrens eine Zeilen-Auslesezeit verkürzt und die Datenmenge reduziert werden, was einen Bedarf an Speicher und eine Rechenleistung reduzieren kann. Zudem wird durch das analoge Binning das Signal zu Rauschverhältnis verbessert.

In verschiedenen Ausführungsbeispielen kann der Contact Image Sensor und/oder der lichtempfindliche Zeilenpixel-Array mittels eines digitalen Binning-Verfahrens betrieben werden. Bei einem digitalen Binning-Verfahren können Pixelwerte aus den Pixeln ausgelesen werden, digitalisiert werden, addiert werden und beispielsweise optimal gemittelt werden.

In verschiedenen Ausführungsbeispielen kann der Contact Image Sensor und/oder der lichtempfindliche Zeilenpixel-Array mittels eines physikalischen Binning-Verfahrens betrieben werden, um beispielsweise eine Datenreduktion zu erreichen. Bei dem physikalischen Binning-Verfahren müssen weniger Pixel ausgelesen werden, welches die Zeilen-Auslesezeit verkürzen kann und die Datenmenge reduzieren kann, was den Bedarf an Speicher und Rechenleistung reduziert kann.

In verschiedenen Ausführungsbeispielen können beispielsweise bei einem 600 dpi Contact Image Sensor und/oder einem lichtempfindlichen Zeilenpixel-Array in einem 200 dpi Modus drei Pixel zusammengefasst werden. Dadurch kann eine Auslesezeit für eine Zeile typisch dreimal kürzer werden und dadurch können Banknoten in einer hierin beschriebenen Vorrichtung schneller transportiert werden.

In verschiedenen Ausführungsbeispielen kann für eine Scheck-Verarbeitung gemäß Regelwerken eine Auflösung von 200 dpi verlangt werden.

In verschiedenen Ausführungsbeispielen kann die Steuerungsvorrichtung jede Zeile einzeln oder mehrere Zeilen annähernd gleichzeitig auslesen.

In verschiedenen Ausführungsbeispielen kann eine Zeile als CMOS-Line-Scan-Camera eingerichtet sein.

In verschiedenen Ausführungsbeispielen können mittels eines 200 dots per inch Contact Image Sensor und/oder eines lichtempfindlichen Zeilenpixel-Arrays Moiré-freie Aufnahmen ermöglicht werden, wenn eine Zeile mittels eines Binning-Verfahrens im 100 dpi-Modus betrieben wird und eine Abtastung in Transportrichtung ebenfalls in einer Auflösung von 100 dpi erfolgt.

In verschiedenen Ausführungsbeispielen kann mittels eines 600 dpi Contact Image Sensors und/oder eines Zeilenpixel-Arrays, wenn mittels eines Binning-Verfahrens in einer Zeile eine Auflösung von 300 dpi, 200 dpi, 100 dpi, usw., resultiert, eine Moiré-freie Abtastung mit derselben Auflösung wie in der Zeile möglich sein.

In verschiedenen Ausführungsbeispielen kann die Steuerungsvorrichtung einen Speicher aufweisen, in dem zumindest ein Pixelwert einer Mehrzahl von Pixelwerten zumindest einer Zeile und/oder beider Zeilen gespeichert werden können.

In verschiedenen Ausführungsbeispielen kann die Mehrzahl von eindimensionalen Zeilenpixel-Arrays fest, beispielsweise an einem Gehäuse der Vorrichtung, positioniert sein und das Objekt, beispielsweise ein Scheck oder eine Banknote, kann in einem schmalen Spalt, beispielsweise in einem Wertebereich von etwa 0,1 mm bis etwa 5 mm, beispielsweise in einem Wertebereich von etwa 0,15 mm bis etwa 3 mm, beispielsweise in einem Wertebereich von etwa 0,2 mm bis etwa 1,5 mm, transportiert werden.

In verschiedenen Ausführungsbeispielen kann eine Tiefenschärfe eines Contact Image Sensors und/oder eines lichtempfindlichen Zeilenpixel-Arrays in einem Wertebereich von etwa 0,05 Millimetern bis etwa 5 Millimetern, beispielsweise in einem Wertebereich von etwa 0,075 Millimetern bis etwa 3 Millimetern, beispielsweise in einem Wertebereich von etwa 0,1 Millimetern bis etwa 1,6 Millimetern liegen.

Verschiedene Ausführungsbeispiele stellen eine Vorrichtung zum Verbessern der Reproduzierbarkeit von Aufnahmen bereit, bei der jedes Zeilenpixel-Array eine Mehrzahl von Pixel aufweist, und jeder Pixel zumindest eine Fotodiode, beispielsweise eine lichtempfindliche Fotodiode, in CMOS-Bauweise zum Erfassen eines Pixelwertes des aus der Lichtquelle emittierten Lichts aufweist.

In verschiedenen Ausführungsbeispielen kann der Contact Image Sensor und/oder der lichtempfindliche Zeilenpixel-Array so eingerichtet sein, dass er zwei Zeilen bzw. eindimensionale Zeilenpixel-Arrays mit jeweils einer Mehrzahl von Pixel aufweist.

In verschiedenen Ausführungsbeispielen kann die Steuerungsvorrichtung eingerichtet sein, zumindest einen Pixelwert durch Ansteuern zumindest eines Pixels in einem eindimensionalen Pixel-Array auszulesen.

In verschiedenen Ausführungsbeispielen kann die Steuerungsvorrichtung zumindest einen Prozessor und/oder ein Field Programmable Gate Array (FPGA) aufweisen.

In verschiedenen Ausführungsbeispielen kann der Contact Image Sensor und/oder der lichtempfindliche Zeilenpixel-Array so eingerichtet sein, dass er eine zweidimensionale Pixel-Arrayzeile aufweist, von der jeder Pixel individuell mittels der Steuerungsvorrichtung ansteuerbar ist.

Verschiedene Ausführungsbeispiele stellen eine Vorrichtung zum Verbessern der Reproduzierbarkeit von Aufnahmen bereit, bei der zumindest ein erster Zeilenpixel-Array und ein zweiter Zeilenpixel-Array der Mehrzahl von Zeilenpixel-Arrays identisch aufgebaut sind. Der erste Zeilenpixel-Array und der zweite Zeilenpixel-Array können dieselbe Anzahl von Pixel aufweisen. Die Pixelgröße der Pixel des ersten Zeilenpixel-Arrays und des zweiten Zeilenpixel-Arrays können annähernd gleich groß, beispielsweise gleich groß, sein.

Verschiedene Ausführungsbeispiele stellen eine Vorrichtung zum Verbessern der Reproduzierbarkeit von Aufnahmen bereit, bei der zumindest ein zweiter Zeilenpixel-Array der Mehrzahl von Zeilenpixel-Arrays in der Transportrichtung des Objektes länger, beispielsweise um 10% Prozent bis zu einem Faktor 10 länger, beispielsweise bis zu einem Faktor 7,5, ausgeführt ist als ein erster Zeilenpixel-Array der Mehrzahl von Zeilenpixel-Arrays in der Transportrichtung des Objektes.

Verschiedene Ausführungsbeispiele stellen eine Vorrichtung zum Verbessern der Reproduzierbarkeit von Aufnahmen bereit, bei der zumindest ein Pixel in zumindest einem Zeilenpixel-Array quer zur Transportrichtung breiter als ein Pixel in zumindest einem weiteren Zeilenpixel-Array ausgebildet ist. Beispielsweise kann eine erste Zeile eine Mehrzahl von Pixel der gleichen Größe aufweisen. Eine benachbarte Zeilen kann Pixel unterschiedlicher Breite aufweisen, beispielsweise Pixel, die doppelt so breit sind wie Pixel der ersten Zeile. Beispielsweise kann eine zweite Zeilen eine Pixelfolge aufweisen von: Pixel mit Pixelbreite von zwei Pixeln, Pixel mit Pixelbreite von einem Pixel, Pixel mit Pixelbreite von einem Pixel, Pixel mit Pixelbreite von zwei Pixeln. Diese Folge kann sich in der zweiten Zeile wiederholen. In einer dritten Zeile kann ein Pixel eine Pixelbreite aufweisen von: Pixel mit Pixelbreite von drei Pixeln. Diese Pixelbreite kann sich in der dritten Zeile wiederholen. In einer vierten Zeile kann ein Pixel eine Pixelbreite von sechs Pixeln aufweisen. Diese Breite kann sich in der vierten Zeile wiederholen.

Verschiedene Ausführungsbeispiele stellen eine Vorrichtung zum Verbessern der Reproduzierbarkeit von Aufnahmen bereit, bei der zumindest ein Pixel in zumindest einem Zeilenpixel-Array breiter als ein Pixel in zumindest einem weiteren Zeilenpixel-Array ausgeführt sein kann. Beispielsweise kann ein Pixel in einem ersten Zeilenpixel-Array in Bezug auf einen entsprechenden Pixel in einem zweiten Zeilenpixel-Array um beispielsweise etwa den Faktor 1,5 bis etwa den Faktor 3,5, beispielsweise um einen Faktor 2 breiter sein. Anders ausgedrückt, kann eine Pixelbreite in einer ersten Zeile doppelt so breit ausgeführt sein in Bezug auf eine Pixelbreite in einer zweiten Zeilen.

Verschiedene Ausführungsbeispiele stellen eine Vorrichtung zum Verbessern der Reproduzierbarkeit von Aufnahmen bereit, bei der eine Sensitivität über die Transportstrecke annähernd konstant, beispielsweise konstant, sein kann.

Verschiedene Ausführungsbeispiele stellen eine Vorrichtung zum Verbessern der Reproduzierbarkeit von Aufnahmen bereit, bei der die Steuerungsvorrichtung ferner eingerichtet ist, den ersten Zeilenpixel-Array und den zweiten Zeilenpixel-Array voneinander unabhängig zu betreiben, und, bei der die Steuerungsvorrichtung eingerichtet ist, den zweiten Zeilenpixel-Array zu dem ersten Zeilenpixel-Array zuzuschalten und umgekehrt.

Verschiedene Ausführungsbeispiele stellen eine Vorrichtung zum Verbessern der Reproduzierbarkeit von Aufnahmen bereit, bei der die Mehrzahl der Zeilenpixel-Arrays eine Auflösung in der Richtung quer zu der Transportrichtung von 200 dpi aufweist.

Verschiedene Ausführungsbeispiele stellen eine Vorrichtung zum Verbessern der Reproduzierbarkeit von Aufnahmen bereit, bei der ein Zeilenpixel-Array (7a) eine Auflösung in der Richtung quer zu der Transportrichtung (8) von 200 dpi und ein zweiter Zeilenpixel-Array (7b) eine Auflösung in der Richtung quer zu der Transportrichtung (8) von 100 dpi aufweist.

Verschiedene Ausführungsbeispiele stellen eine Vorrichtung zum Verbessern der Reproduzierbarkeit von Aufnahmen bereit, bei der ein Pixel der Mehrzahl von Zeilenpixel-Arrays eine Größe in einem Wertebereich von etwa 150 Mikrometern mal etwa 150 Mikrometern, beispielsweise in einem Wertebereich von etwa 130 Mikrometern mal etwa 130 Mikrometern, beispielsweise in einem Wertebereich von etwa 127 Mikrometern mal 127 Mikrometern aufweist.

Verschiedene Ausführungsbeispiele stellen eine Vorrichtung zum Verbessern der Reproduzierbarkeit von Aufnahmen bereit, bei der die Steuerungsvorrichtung ferner eingerichtet ist, in einem Fall, bei dem das Objekt zumindest ein Scheck ist, eine Auflösung des ersten Zeilenpixel-Arrays auf 200 dpi einzustellen, das zweite Zeilenpixel-Array zu deaktivieren, das erste Zeilenpixel-Array anzusteuern, und die Pixelwerte des ersten Zeilenpixel-Arrays auszulesen.

Verschiedene Ausführungsbeispiele stellen eine Vorrichtung zum Verbessern der Reproduzierbarkeit von Aufnahmen bereit, bei der die Steuerungsvorrichtung ferner eingerichtet ist, in dem Fall, bei dem das Objekt zumindest ein Scheck ist, eine Geschwindigkeit zumindest eines Schecks in Transportrichtung mittels einer Transportvorrichtung zu reduzieren, so dass ein Scheck in Transportrichtung langsamer transportiert werden kann, um beispielsweise eine 200 dpi-Auflösung in Transportrichtung zu erreichen.

Verschiedene Ausführungsbeispiele stellen eine Vorrichtung zum Verbessern der Reproduzierbarkeit von Aufnahmen bereit, bei der die Steuerungsvorrichtung ferner eingerichtet ist, in einem Fall, bei dem das Objekt zumindest eine Banknote ist, eine Auflösung des ersten Zeilenpixel-Arrays und des zweiten Zeilenpixel-Arrays auf 100 dpi einzustellen, das erste und das zweite Zeilenpixel-Array zu aktivieren, zumindest eine Ladung, welche in Potentialtöpfen zweier benachbarter Pixel in dem ersten Zeilenpixel-Array gesammelt ist, physikalisch zusammenzufassen und Pixelwerte auszulesen, zumindest eine Ladung, welche in Potentialtöpfen zweier von zu den zwei benachbarten Pixel in dem ersten Zeilenpixel-Array korrespondierenden benachbarten Pixel in dem zweiten Zeilenpixel-Array gesammelt ist, physikalisch zusammenzufassen und Pixelwerte auszulesen, und einen Pixelwert basierend auf den ausgelesenen Pixelwerten zur Weiterverarbeitung bereitzustellen.

Verschiedene Ausführungsbeispiele stellen eine Vorrichtung zum Verbessern der Reproduzierbarkeit von Aufnahmen bereit, bei der die Steuerungsvorrichtung eingerichtet ist, eine Auflösung des ersten Zeilenpixel-Arrays und des zweiten Zeilenpixel-Arrays auf einen Wert zwischen etwa 90 dpi bis etwa 130 dpi, beispielsweise etwa 100 dpi einzustellen.

Verschiedene Ausführungsbeispiele stellen eine Vorrichtung zum Verbessern der Reproduzierbarkeit von Aufnahmen bereit, bei der die Steuerungsvorrichtung eingerichtet ist, Pixelwerte zweier benachbarter Pixel eines ersten Zeilenpixel-Arrays und zumindest ein Pixelwert eines benachbarten Pixel eines zweiten Zeilenpixel-Arrays mittels eines analogen Binning-Verfahrens zusammenzufassen, und einen Pixelwert basierend auf den zusammengefassten Pixelwerten zur Weiterverarbeitung bereitzustellen.

Verschiedene Ausführungsbeispiele stellen eine Vorrichtung zum Verbessern der Reproduzierbarkeit von Aufnahmen bereit, bei der die Steuerungsvorrichtung eingerichtet ist, zwei Pixelwerte zweier benachbarter Pixel eines ersten Zeilenpixel-Arrays und ein Pixelwert eines benachbarten Pixel eines zweiten Zeilenpixel-Arrays mittels eines analogen 3er-Binning-Verfahrens zusammenzufassen, und einen Pixelwert basierend auf den zusammengefassten Pixelwerten zur Weiterverarbeitung bereitzustellen.

Verschiedene Ausführungsbeispiele stellen eine Vorrichtung zum Verbessern der Reproduzierbarkeit von Aufnahmen bereit, bei der die Steuerungsvorrichtung ferner eingerichtet ist, Pixelwerte zweier benachbarter Pixel des ersten Zeilenpixel-Arrays und Pixelwerte zweier benachbarte Pixel des zweiten Zeilenpixel-Arrays, die zu den zwei benachbarten Pixel des ersten Zeilenpixel-Arrays korrespondieren, mittels eines analogen 2x2-Binning-Verfahrens zusammenzufassen, und zumindest einen Pixelwert basierend auf den zusammengefassten Pixelwerten zur Weiterverarbeitung bereitzustellen.

Verschiedene Ausführungsbeispiele stellen eine Vorrichtung zum Verbessern der Reproduzierbarkeit von Aufnahmen bereit, bei der eine höhere Lichtempfindlichkeit pro virtuellem Bildpunkt erreicht werden kann und ein Signal-Rauschabstand verbessert werden kann.

Verschiedene Ausführungsbeispiele stellen eine Vorrichtung zum Verbessern der Reproduzierbarkeit von Aufnahmen bereit, bei der die Steuerungsvorrichtung ferner eingerichtet ist, das erste und das zweite Zeilenpixel-Array zu aktivieren, zumindest einen ersten Pixelwert eines ersten Pixels des ersten Zeilenpixel-Arrays und einen ersten Pixelwert eines erstes Pixels des zweiten Zeilenpixel-Arrays auszulesen, zumindest einen zweiten Pixelwert des zweiten Pixels des ersten Zeilenpixel-Arrays und einen zweiten Pixelwert des zweiten Pixels des zweiten Zeilenpixel-Arrays auszulesen, und jeweils einen Mittelwert mittels eines Line-Averaging-Aquisition-Verfahrens aus den ersten Pixelwerten und den zweiten Pixelwerten zu berechnen und jeweils einen Pixelwert zur Weiterverarbeitung bereitzustellen.

Verschiedene Ausführungsbeispiele stellen eine Vorrichtung zum Verbessern der Reproduzierbarkeit von Aufnahmen bereit, bei der die Steuerungsvorrichtung eingerichtet sein kann, um im Betrieb zwischen einer 100 dots per inch Auflösung und einer 200 dots per inch Auflösung mittels Software umzuschalten.

Verschiedene Ausführungsbeispiele stellen eine Vorrichtung zum Verbessern der Reproduzierbarkeit von Aufnahmen bereit, bei der die Vorrichtung zumindest eine zweite Lichtquelle zum Beleuchten des Objektes aufweist, wobei die zweite Lichtquelle zu der Lichtquelle auf einer in Bezug auf die Mehrzahl von Stablinsen entgegengesetzten Seite angeordnet ist, und/oder die Stablinsen Gradienten-Index-Stablinsen sind. Die Lichtquelle kann ein Objekt beispielsweise von einem Winkel von etwa 50 Grad zur Transportebene beleuchten und die zweite Lichtquelle kann das Objekt beispielsweise von einem Winkel von etwa 60 Grad zur Transportebene beleuchten. Die zweite Lichtquelle kann in Bezug auf die Mehrzahl von Stablinsen symmetrisch zu der Lichtquelle angeordnet sein, beispielsweise in demselben Winkel, in einem Winkelbereich von etwa 50 bis etwa 60 Grad, zur Transportrichtung.

Verschiedene Ausführungsbeispiele stellen eine Vorrichtung zum Verbessern der Reproduzierbarkeit von Aufnahmen bereit, die eine Mehrzahl von Lichtquellen aufweisen kann. Die Vorrichtung kann beispielsweise in einem Auflicht-Betrieb betrieben werden, bei dem zumindest eine Lichtquelle oder mehrere Lichtquellen auf der Seite wie die Bildebene positioniert ist/sind und betrieben wird/werden, um zumindest ein Objekt zu beleuchten, welches in der Vorrichtung transportiert werden kann. Die Vorrichtung kann beispielsweise in einem Durchlicht-Betrieb betrieben werden, bei dem zumindest eine Lichtquelle auf einer Seite, die auf einer in Bezug auf das Objekt gegenüberliegenden Seite der Bildebene positioniert und betrieben wird, um das Objekt zu durchleuchten. Die Lichtquelle und/oder kann/können beispielsweise in einem Hellfeld-Durchlichtbetrieb betrieben werden. Die Lichtquelle kann beispielsweise in einem Dunkelfeld-Durchlichtbetrieb betrieben werden. Anders ausgedrückt kann zumindest eine Lichtquelle in Bezug auf die Objektebene auf der gleichen Seite (Auflichtmessung) wie die Bildebene angeordnet sein und/oder zumindest eine Lichtquelle auf der gegenüberliegenden Seite (Durchlichtmessung) wie die Bildebene angeordnet sein.

Verschiedene Ausführungsbeispiele stellen eine Vorrichtung zum Verbessern der Reproduzierbarkeit von Aufnahmen bereit, bei der die Stablinsen Gradienten-Index-Stablinsen sein können.

Verschiedene Ausführungsbeispiele stellen eine Vorrichtung zum Verbessern der Reproduzierbarkeit von Aufnahmen bereit, bei der die Vorrichtung eine Mehrzahl von Reihen von in Reihe angeordneten Stablinsen aufweist, bei der die Reihen von Stablinsen parallel zueinander angeordnet sind, und bei der die Reihen jeweils quer zu der Transportvorrichtung angeordnet sind.

Verschiedene Ausführungsbeispiele stellen eine Vorrichtung zum Verbessern der Reproduzierbarkeit von Aufnahmen bereit, bei der zumindest eine erste Reihe der Mehrzahl von Reihen von Stablinsen zu zumindest einer weiteren Reihe der Mehrzahl von Stablinsen benachbart angeordnet ist, bei der die erste Reihe von Stablinsen und die weitere Reihe von Stablinsen in einer Richtung quer zur Transportrichtung des Objekts in einem vordefinierten Abstand, beispielsweise in einem Wertebereich von etwa 1 Mikrometer bis 10 Mikrometern, beispielsweise in einem Abstand von 2 Mikrometern, beispielsweise von 4 Mikrometern, beispielsweise von 7 Mikrometern, beispielsweise von 9 Mikrometern, voneinander angeordnet sind und um einen vordefinierten Abstand, beispielsweise um etwa einen halben Durchmesser einer Stablinse, beispielsweise in einem Wertebereich von etwa 100 Mikrometern bis etwa 200 Mikrometern, beispielsweise von 130 Mikrometern bis etwa 170 Mikrometern, beispielsweise in einem Abstand von etwa 150 Mikrometern, quer zu der Transportrichtung voneinander verschoben angeordnet ist, und/oder zumindest ein Zwischenraum zwischen einer Stablinse und einer benachbarten Stablinse mit zumindest einem Füllmaterial, beispielsweise schwarzes Silikonwachs bzw. black silicone resin, aufgefüllt ist, bei dem die schwarze Farbe verhindern kann, dass Licht vom Objekt durch die Spalten auf den Pixel-Array fällt oder Licht von einer Stablinse in eine benachbarte Stablinse eindringt.

Verschiedene Ausführungsbeispiele stellen eine Vorrichtung zum Verbessern der Reproduzierbarkeit von Aufnahmen bereit, bei der ein Abstand einer Stablinse einer ersten Reihe zu einer Stablinse einer zweiten Reihe in einem Wertebereich von etwa 0 Millimeter bis etwa 5 Millimeter aufweisen.

Verschiedene Ausführungsbeispiele stellen ein Verfahren zum Verbessern der Reproduzierbarkeit von Aufnahmen bereit.

Verschiedene Ausführungsbeispiele stellen ein Verfahren zum Verbessern der Reproduzierbarkeit von Aufnahmen bereit. Das Verfahren weist ein Führen zumindest eines Objektes in einer Objektebene mittels einer Führungsvorrichtung auf. Das Verfahren weist ein Transportieren des Objekts in der Objektebene in einer Transportrichtung mittels zumindest einer Antriebsvorrichtung auf. Das Verfahren weist ein Beleuchten des Objektes mittels zumindest einer Lichtquelle eines Contact Image Sensors auf. Das Verfahren weist ein zumindest teilweises Streuen eines von der Lichtquelle emittierten Lichts von dem Objekt hin zu einer Mehrzahl von Stablinsen des Contact Image Sensors auf. Das Verfahren weist ein Abbilden zumindest eines Teils des Licht, das von dem Objekt gestreut wird, mittels der Mehrzahl von Stablinsen, die zwischen der Objektebene und einer Bildebene und in einer Reihe entlang einer Richtung quer zu der Transportrichtung des Objektes angeordnet sind, zu zumindest einem lichtempfindlichen Zeilenpixel-Array des Contact Image Sensors auf. Das Verfahren weist ein Steuern zumindest der Lichtquelle und/oder des lichtempfindlichen Zeilenpixel-Arrays mittels einer Steuerungsvorrichtung auf, wobei der lichtempfindliche Zeilenpixel-Array eine Mehrzahl von eindimensionalen Zeilenpixel-Arrays aufweist, die sich jeweils entlang der Richtung quer zu der Transportrichtung des Objektes erstrecken, parallel zueinander und benachbart angeordnet sind, und wobei jedes Zeilenpixel-Array eine Länge quer zu der Transportrichtung des Objektes aufweist, die das zu erfassende Objekt vollständig abdeckt. Das Verfahren weist ein Erfassen des durch die Stablinsen abgebildeten Lichts mittels zumindest eines Bereiches eines lichtempfindlichen Zeilenpixel-Arrays, der in der Bildebene angeordnet ist auf. Das Verfahren weist ein Zusammenführen zumindest einzelner Pixelwerte der Mehrzahl von eindimensionalen Zeilenpixel-Arrays auf. Das Verfahren weist ein Bereitstellen eines Pixelwertes zur Weiterverarbeitung mittels der Steuerungsvorrichtung auf.

Das Verfahren zum Verbessern der Reproduzierbarkeit von Aufnahmen kann eingerichtet sein, die Lichtquelle in einem Zeitmultiplex-Verfahren zu betrieben.

Das Verfahren zum Verbessern der Reproduzierbarkeit von Aufnahmen kann eingerichtet sein, das Objekt der Reihe nach mit einer Mehrzahl von Farben und/oder Infrarot und/oder Ultraviolett zu beleuchten.

Das Zusammenführen zumindest einzelner Pixelwerte des Verfahrens kann beispielsweise ein Zusammenführen mittels eines analogen Binning-Verfahrens aufweisen. Das Zusammenführen mittels eines analogen Binning-Verfahrens kann beispielsweise ein 2x2-Binning aufweisen, bei dem zwei Pixelwerte aus einem ersten Zeilenpixel-Array und zwei Pixelwerte aus einem zweiten Zeilenpixel-Array zusammengeführt werden. Das Zusammenführen mittels eines analogen Binning-Verfahrens kann beispielsweise ein 3er-Binning-Verfahren aufweisen, bei dem Pixelwerte zweier benachbarter Pixel in einem ersten Zeilenpixel-Array und ein Pixelwert eines korrespondierenden Pixel in einem zweiten Zeilenpixel-Array zusammengeführt werden. Das Zusammenführen zumindest einzelner Pixelwerte des Verfahrens kann beispielsweise ein digitales Zusammenführen, beispielsweise ein digitales Binning aufweisen.

Das Verfahren zum Verbessern der Reproduzierbarkeit von Aufnahmen kann in einem Fall, bei dem das Objekt zumindest ein Scheck ist, Einstellen einer Auflösung des ersten Zeilenpixel-Arrays auf 200 dpi mittels einer Steuerungsvorrichtung, Deaktivieren des zweiten Zeilenpixel-Arrays mittels einer Steuerungsvorrichtung, Ansteuern des ersten Zeilenpixel-Arrays mittels einer Steuerungsvorrichtung, und Auslesen der Pixelwerte des ersten Zeilenpixel-Arrays mittels einer Steuerungsvorrichtung, umfassen.

Das Verfahren zum Verbessern der Reproduzierbarkeit von Aufnahmen kann in einem Fall, bei dem ein Objekt zumindest eine Banknote ist, Einstellen einer Auflösung des ersten Zeilenpixel-Arrays und des zweiten Zeilenpixel-Arrays auf 100 dpi mittels der Steuerungsvorrichtung, Aktivieren des ersten und des zweiten Zeilenpixel-Arrays mittels der Steuerungsvorrichtung, physikalisch Zusammenzufassen zumindest einer Ladung, welche in Potentialtöpfen zweier benachbarter Pixel in dem ersten Zeilenpixel-Array gesammelt ist, und Auslesen von Pixelwerten mittels der Steuerungsvorrichtung, physikalisch Zusammenzufassen zumindest einer Ladung, welche in Potentialtöpfen zweier von zu den zwei benachbarten Pixel in dem ersten Zeilenpixel-Array korrespondierenden benachbarten Pixel in dem zweiten Zeilenpixel-Array gesammelt ist, und Auszulesen von Pixelwerten mittels der Steuerungsvorrichtung, und Bereitstellen eines Pixelwerts basierend auf den ausgelesenen Pixelwerten zur Weiterverarbeitung mittels der Steuerungsvorrichtung, umfassen.

Das Verfahren zum Verbessern der Reproduzierbarkeit von Aufnahmen kann ein Zusammenführen von Pixelwerten zweier benachbarter Pixel des ersten Zeilenpixel-Arrays und zumindest eines Pixelwerts eines benachbarten Pixel des zweiten Zeilenpixel-Arrays mittels eines analogen oder digitalen Binning-Verfahrens mittels einer Steuerungsvorrichtung, und Bereitstellen eines Pixelwerts basierend auf den zusammengefassten Pixelwerten zur Weiterverarbeitung mittels einer Steuerungsvorrichtung, umfassen.

Das Verfahren zum Verbessern der Reproduzierbarkeit von Aufnahmen kann umfassen ein Aktivieren des ersten und des zweiten Zeilenpixel-Arrays mittels einer Steuerungsvorrichtung, Auslesen zumindest eines ersten Pixelwerts eines ersten Pixels des ersten Zeilenpixel-Arrays und eines ersten Pixelwerts eines erstes Pixels des zweiten Zeilenpixel-Arrays mittels einer Steuerungsvorrichtung, Auslesen zumindest eines zweiten Pixelwerts des zweiten Pixels (7a_2) des ersten Zeilenpixel-Arrays (7a) und eines zweiten Pixelwerts des zweiten Pixels (7b_2) des zweiten Zeilenpixel-Arrays (7b) mittels einer Steuerungsvorrichtung, und Berechnen jeweils eines Mittelwerts mittels eines Line-Averaging-Aquisition-Verfahrens aus den ersten Pixelwerten und den zweiten Pixelwerten mittels einer Steuerungsvorrichtung und Bereitstellen jeweils eines Pixelwerts zur Weiterverarbeitung mittels einer Steuerungsvorrichtung, und/oder Umschalten im Betrieb zwischen einer 100 dots per inch Auflösung und einer 200 dots per inch Auflösung mittels Software und/oder mittels einer Steuerungsvorrichtung.

Unter dem hierin verwendeten Begriff analoges Binning wird ein Verfahren verstanden, bei dem Ladung, welche in Potentialtöpfen gesammelt werden kann, von zwei oder mehreren Pixel, physikalisch zusammengefasst wird. Bei einem analogen Binning kann die Auslesegeschwindigkeit für eine Zeile verkürzt werden.

Unter dem hierin verwendeten Begriff digitales Binning wird ein Verfahren verstanden, bei dem einzelne Pixelwerte ausgelesen werden, digitalisiert werden, addiert werden und eventuell gemittelt werden.

Mit dem hierin verwendeten Begriff Line Averaging Aquisition Mode wird beispielsweise eine Betriebsart einer hierin beschriebenen Steuerungsvorrichtung und einer hierin beschriebenen Vorrichtung und/oder Verfahren, bezeichnet. Bei einem Line Averaging Aquisition Mode kann eine Linien-Erfassung ausgeführt werden, wenn sowohl eine erste als auch eine zweite Zeile eines Contact Image Sensors belichtet wird. Wenn eine Erfassung einer ersten und zweiten Zeile abgeschlossen ist, können Pixelwerte der ersten Zeile und Pixelwerte der zweiten Zeile gemittelt werden bzw. ein Mittelwert gebildet werden. Die Mittelwertbildung kann wie folgt ablaufen: Der Wert des Pixel 1 in einer erste Zeile A wird zu dem Wert des Pixels 1 in einer zweiten Zeile B addiert und die Summe der Pixelwerte wird durch die Zahl 2 geteilt. Das Ergebnis kann aufgerundet werden. Der Wert des Pixel 2 in der ersten Zeile A wird zu dem Wert des Pixels 2 in der zweiten Zeile B addiert und die Summe der Pixelwerte wird durch die Zahl 2 geteilt. Das Ergebnis kann aufgerundet werden. Der Wert des Pixel 3 in der ersten Zeile A wird zu dem Wert des Pixels 3 in der zweiten Zeile B addiert und die Summe der Pixelwerte wird durch die Zahl 2 geteilt. Das Ergebnis kann aufgerundet werden usw. Die gemittelten Werte können dann von dem Contact Image Sensor zur Weiterverarbeitung derart übermittelt werden, als ob sie von einer einzigen Zeile stammten.

Mit den hierin beschriebenen Vorrichtungen und den hierin beschriebenen Verfahren können moiré-freie Sensordaten geliefert werden, was eine Grundlage für eine zuverlässige Erkennung von Flecken, Graffiti und weiteren Verunstaltungen ist. Graffiti sind Kritzeleien auf Banknoten. Weil die Reproduzierbarkeit der Messung durch das hierin beschriebene Verfahren verbessert wird, können auch feine Strukturen auf der Banknote besser erfasst werden, wie beispielsweise eine Seriennummer, Durchsichtregister, Barcode, Clear Text, Mikroperforation, Mikroprinting, Omron Ringe, dünne Risse und die Farbtonmessungen werden genauer.

Der hierin verwendete Begriff CMOS bzw. Complementary-Metal-Oxide-Semiconductor bezeichnet Halbleiterbauelemente, bei denen sowohl p-Kanal- als auch n-Kanal-MOSFETs auf einem gemeinsamen Substrat verwendet werden können. Ferner kann auch ein Charge Coupled Device-Array (CCD-Array) verwendet werden.

Der hierin verwendete Begriff Contact Image Sensor bzw. Contact Imaging Sensor (CIS) bzw. Kontakt-Bildsensor bezeichnet eine kostengünstige, auf CMOS basierende Technologie für Bildsensoren. Ein Contact Image Sensor liegt meist als Zeilensensor vor, bei dem eine Mehrzahl von lichtempfindlichen Punkte bzw. Pixel in einer Reihe angeordnet sind. Über jedem einzelnen dieser Punkte kann sich eine winzige Kunststofflinse befinden. Eine Linse kann mehrere Pixel abdecken und/oder ein Pixel kann von mehreren Linsen Licht sammeln. Die Beleuchtung des zu erfassenden Objektes kann dabei meist über parallel zu den Sensoren angebrachte Lichtquelle-LEDs - bei Farbscannern über Lichtquelle-RGB-LEDs erfolgen. Zur Bilderfassung kann der Sensor nahezu direkten Kontakt zur Vorlage erfordern.

Die oben beschriebenen Ausgestaltungen und genannten Vorteile beziehen sich auf die Vorrichtung und das Verfahren zum Verbessern der Reproduzierbarkeit von Aufnahmen.

Ausführungsbeispiele der Erfindung sind in den Figuren dargestellt und werden im Folgenden näher erläutert. Es zeigen
FIG. 1A, FIG. 1B, FIG. 1C schematische Darstellungen eines Moiré-Effektes anhand einer Banknote,
FIG. 2 eine schematische Darstellung einer Vorrichtung zum Verbessern der Reproduzierbarkeit von Aufnahmen gemäß verschiedenen Ausführungsbeispielen;
FIG. 3 eine schematische Darstellung einer Vorrichtung zum Verbessern der Reproduzierbarkeit von Aufnahmen gemäß verschiedenen Ausführungsbeispielen;
FIG. 4A, FIG. 4B, FIG. 4C, die zum Verständnis dienen, und FIG. 4D schematische Darstellungen eines Teilbereichs einer Vorrichtung und eines Verfahrens zum Verbessern der Reproduzierbarkeit von Aufnahmen gemäß verschiedenen Ausführungsbeispielen;
FIG. 5 eine schematische Darstellung eines Teilbereichs einer Vorrichtung zum Verbessern der Reproduzierbarkeit von Aufnahmen gemäß verschiedenen Aspekten von erfindungsgemäßen Ausführungsbeispielen;
FIG. 6 eine schematische Darstellung eines Teilbereichs einer Vorrichtung zum Verbessern der Reproduzierbarkeit von Aufnahmen gemäß verschiedenen Ausführungsbeispielen; und
FIG. 7 ein schematisches Ablaufdiagramm, welches schematisch ein Verfahren zum Verbessern der Reproduzierbarkeit von Aufnahmen gemäß verschiedenen Ausführungsbeispielen veranschaulicht.

In der folgenden ausführlichen Beschreibung wird auf die beigefügten Zeichnungen Bezug genommen, die Teil der vorliegenden Anmeldung bilden und in denen zur Veranschaulichung spezifische Ausführungsbeispiele gezeigt sind, in denen die Erfindung ausgeübt werden kann.

In dieser Hinsicht wird eine Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsbeispielen in einer Anzahl verschiedener Orientierungen positioniert werden können, dient die Richtungsterminologie zur Veranschaulichung und ist auf keinerlei Weise einschränkend. Es versteht sich von selbst, dass andere Ausführungsbeispiele benutzt und strukturelle oder logische Änderungen vorgenommen werden können, ohne von dem Schutzumfang der vorliegenden Erfindung abzuweichen.

Ferner versteht sich von selbst, dass die Merkmale der hierin beschriebenen verschiedenen beispielhaften Ausführungsbeispiele miteinander kombiniert werden können, sofern nicht spezifisch anders angegeben.

Die folgende ausführliche Beschreibung ist deshalb nicht in einschränkendem Sinne aufzufassen, und der Schutzumfang der vorliegenden Erfindung wird durch die angefügten Ansprüche definiert.

Die FIG. 1A, FIG. 1B und FIG. 1C zeigen eine schematische Darstellung von Moiré-Effekten auf ein und derselben 50-Euro-Banknote 100 bei unterschiedlichem Schrägzug in Transportrichtung mittels eines Banknoten-Lesers.

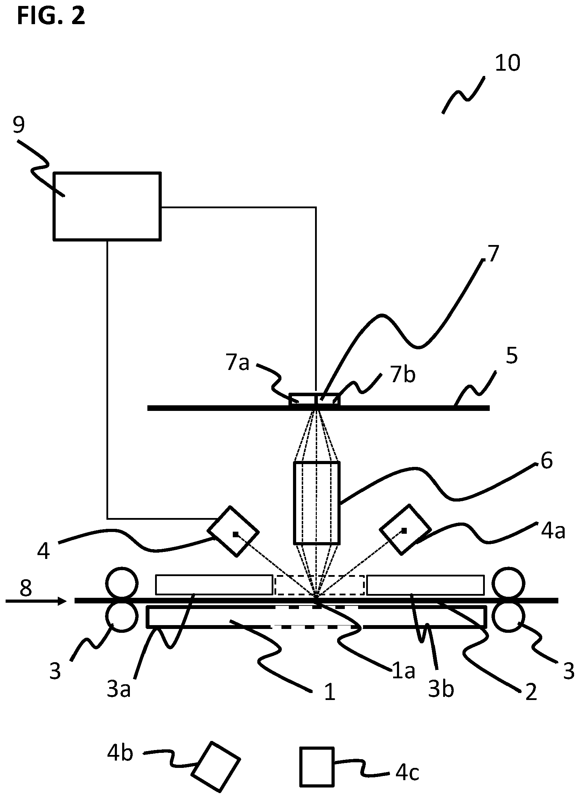

FIG. 2 ist eine schematische Darstellung einer Vorrichtung 10 zum Verbessern der Reproduzierbarkeit von Aufnahmen gemäß verschiedenen Ausführungsbeispielen.

Die Vorrichtung 10 zum Verbessern der Reproduzierbarkeit von Aufnahmen umfasst eine Führungsvorrichtung 1, die eingerichtet ist, zumindest ein Objekt 2 in der Objektebene 1a zu führen, zumindest eine Antriebsvorrichtung 3, die eingerichtet ist, das Objekt 2 auf der Führungsvorrichtung 1 in der Objektebene 1a in einer Transportrichtung 8 zu transportieren, zumindest eine Lichtquelle 4 zum Beleuchten des Objektes 2, eine Bildebene 5, eine Mehrzahl von Stablinsen 6, die zwischen der Objektebene 1a und der Bildebene 5 und in einer Reihe entlang einer Richtung quer zu der Transportrichtung 8 des Objektes 2 angeordnet sind, zumindest einen lichtempfindlichen Zeilenpixel-Array 7 eines Contact Image Sensors, der in der Bildebene 5 angeordnet ist, eine Steuerungsvorrichtung 9, die eingerichtet ist, zumindest die Lichtquelle 4 und/oder den Zeilenpixel-Array 7 zu steuern und ein von dem Zeilenpixel-Array erzeugtes Signal zu erfassen, wobei ein von der Lichtquelle 4 emittiertes Licht zumindest teilweise von dem Objekt 2 hin zu den Stablinsen 6 gestreut wird, mittels der Stablinsen 6 abgebildet wird und auf zumindest einen Bereich des Zeilenpixel-Arrays 7 trifft, wobei der Contact Image Sensor eine Mehrzahl von eindimensionalen Zeilenpixel-Arrays 7a, 7b aufweist, die sich jeweils entlang der Richtung quer zu der Transportrichtung 8 des Objektes 2 erstrecken, parallel zueinander und benachbart angeordnet sind, und wobei jedes Zeilenpixel-Array 7a, 7b eine Länge quer zu der Transportrichtung 8 des Objektes 2 aufweist, die das zu erfassende Objekt 2 vollständig abdeckt.

Ein Objekt 2, beispielsweise ein Scheck oder eine Banknote, kann von einer ersten Seite mittels der Antriebsvorrichtung 3 entlang der Objektebene 1a transportiert werden oder auch in umgekehrter Richtung (bidirektional). Die Antriebsvorrichtung 3 kann eine Mehrzahl von Rollen aufweisen, die ein Objekt 2 in oder entgegen der Transportrichtung 8 transportieren können. Zumindest eine Rolle kann mittels eines Motors angetrieben werden. Die Vorrichtung 10 kann eine Mehrzahl von Lichtquellen 4, 4a, 4b, 4c, 4d aufweisen. Zumindest eine Lichtquelle kann für einen Auflicht-Betrieb verwendet werden, beispielsweise die Lichtquellen 4 und 4a. Zumindest eine Lichtquelle kann für einen Durchlicht-Betrieb verwendet werden, beispielsweise die Lichtquellen 4b und 4c. Während sich das Objekt 2 entlang der Transportrichtung 8 mit einer vordefinierten Geschwindigkeit fortbewegt, emittieren die Lichtquellen 4, 4a zumindest ein Licht mit einer oder mehreren definierten Wellenlängen. Das emittierte Licht wird teilweise von dem sich darunter befindenden Objekt 2 absorbiert und teilweise in eine Richtung hin zu den Stablinsen 6 gestreut bzw. reflektiert. Die Lichtquellen 4, 4a können stabförmig ausgebildet sein, so dass das Licht ein Streifen des Objekts annähernd gleichzeitig beleuchtet. Ein Teil des gestreuten bzw. reflektierten Lichts wird mittels der Stablinsen 6 optisch durch die Stablinsen 6 auf die Bildebene 5 abgebildet und ein Teil fällt auf die zwei benachbart angeordneten eindimensionalen Zeilen-Pixel-Arrays 7a, 7b, so wie es beispielhaft in der FIG. 2 gezeigt ist.

Die in der FIG. 2 dargestellte Vorrichtung 10 kann eine Lichtquelle 4 aufweisen. Bei der in Bezug auf FIG. 2 veranschaulichten Vorrichtung 10 kann zumindest eine Lichtquelle 4, 4a in unterschiedlichen Winkeln zu der Objektebene angeordnet sein. Beispielsweise kann die Lichtquelle 4, 4a in einem Winkel zur Objektebene 1a in einem Wertebereich von etwa 10 Grad bis etwa 80 Grad, beispielsweise in einem Wertebereich von etwa 15 Grad bis etwa 75 Grad, beispielsweise in einen Winkel von etwa 45 Grad zur Objektebene 1a positioniert sein. Beispielsweise kann die Lichtquelle 4 in einem Winkel von etwa 50 Grad und die zweite Lichtquelle 4a in einem Winkel von etwa 60 Grad zur Objektebene 1a angeordnet sein. Die Lichtquellen 4 und 4a können in Bezug auf die Mehrzahl von Stablinsen symmetrisch angeordnet sein. Durch eine gleichzeitige Beleuchtung kann die Beleuchtung diffuser sein bzw. durch Zeitmultiplexing können winkelabhängige Streuungen ausgewertet werden. Die Vorrichtung 10 kann mittels Auflicht mittels zumindest der Lichtquelle 4 und/oder 4a betrieben werden. Die Vorrichtung 10 kann ferner mittels eines Durchlicht-Betriebs, beispielsweise eines Hellfeld-Betriebs und/oder eines Dunkelfeld-Betriebs, betrieben werden. Die Vorrichtung 10 kann beispielsweise eine Lichtquelle 4b in einem Dunkelfeld-Durchlichtbetrieb betrieben werden. Die Vorrichtung 10 kann beispielsweise eine Lichtquelle 4c in einem Hellfeld-Durchlichtbetrieb betrieben werden. Die Lichtquellen 4b, 4c können in Bezug auf die Objektebene 1a auf einer anderen Seite in Vergleich zu zumindest einer der Lichtquellen 4, 4a angeordnet sein. Die Lichtquelle 4c kann beispielsweise, wenn sie als Hellfeld-Lichtquelle betrieben wird, etwa auf einer optischen Achse einer Stablinse 6, beispielsweise etwa unterhalb der in FIG. 2 dargestellten Stablinse 6 angeordnet sein. Die Lichtquelle 4b kann zu der Lichtquelle 4c benachbart und auf derselben Seite in Bezug auf die Objektebene 1a angeordnet sein.

Zumindest eine der Lichtquellen 4, 4a, 4b, 4c können mittels einer Zeit-Multiplex-Beleuchtung betrieben werden. Das Zeit-Multiplex-Beleuchtungsverfahren kann bezüglich einer Wellenlänge einer Beleuchtung und/oder zwischen Auf- und Durchlicht und/oder bezüglich eines Beleuchtungswinkels erfolgen. Beispielsweise kann die Steuerungsvorrichtung 9 die Lichtquellen 4 und 4a für eine 940 Nanometer-(nm)-Auflichtzeile gleichzeitig betreiben. Die Steuerungsvorrichtung kann beispielsweise ferner die Lichtquelle 4c für eine 940 nm-Durchlichtzeile betreiben. Anders ausgedrückt kann beispielsweise während eines ersten Zeitschritts das Objekt mit der Farbe Blau beleuchtet werden, während eines zweiten Zeitschritts das Objekt mit Grün beleuchtet werden, während eines dritten Zeitschritts das Objekt mit Rot beleuchtet werden und während eines vierten Zeitschrittes das Objekt mit Infrarot bestrahlt werden. Bei jedem Beleuchtungsschritt können die zwei Zeilen 7a, 7b des lichtempfindlichen Zeilenpixel-Arrays 7, beispielsweise CMOS-Zeilen, zumindest einen Pixelwert messen und die Steuerungsvorrichtung 9 kann Daten analog oder digital empfangen und exportieren. Die Steuerungsvorrichtung 9 kann in der Vorrichtung 10 untergebracht sein oder dezentral angeordnet sein.

Die Führungsvorrichtung 1 kann in einem Teilbereich durchsichtig, beispielsweise lichtdurchlässig, ausgebildet sein, beispielsweise bei einem Durchlicht-Betrieb der Vorrichtung 10. Die Vorrichtung 10 kann ferner Führungen 3a und 3b zum Führen eines Objektes 2 aufweisen. Die Führungen 3a und 3b können in Bezug auf ein Objekt 2 entgegengesetzt zu der Führungsvorrichtung 1 angeordnet sein. Die Führungen 3a können zumindest in einem Teilbereich durchsichtig, beispielsweise lichtdurchlässig, ausgebildet sein, beispielsweise bei einem Durchlicht-Betrieb der Vorrichtung 10, so wie es schematisch in der FIG. 2 veranschaulicht ist. Im Bereich der Beleuchtung und/oder der optischen Abbildung können Teile der Führungsvorrichtig fehlen, um die Beleuchtung und/oder die optische Abbildung zu ermöglichen.

Die Steuerungsvorrichtung 9 ist eingerichtet, den ersten Zeilenpixel-Array 7a und den zweiten Zeilenpixel-Array 7b voneinander unabhängig zu betreiben, und den zweiten Zeilenpixel-Array 7b zu dem ersten Zeilenpixel-Array 7a zuzuschalten und umgekehrt. Die Mehrzahl der Zeilenpixel-Arrays 7a, 7b haben beispielhaft eine Auflösung in der Richtung quer zu der Transportrichtung 8 von 200 dpi. Ein Pixel der Mehrzahl von Zeilenpixel-Arrays 7a, 7b kann eine Größe von 127 Mikrometern mal 127 Mikrometern aufweisen.

Die Steuerungsvorrichtung 9 ist eingerichtet, in einem Fall, bei dem das Objekt 2 zumindest ein Scheck ist, eine Auflösung des ersten Zeilenpixel-Arrays 7a auf 200 dpi einzustellen, das zweite Zeilenpixel-Array 7b zu deaktivieren, das erste Zeilenpixel-Array 7a anzusteuern, und die Pixelwerte des ersten Zeilenpixel-Arrays 7a auszulesen.

Die Steuerungsvorrichtung 9 ist ferner eingerichtet, in einem Fall, bei dem das Objekt 2 zumindest eine Banknote ist, eine Auflösung des ersten Zeilenpixel-Arrays 7a und des zweiten Zeilenpixel-Arrays 7b auf 100 dpi einzustellen, das erste und das zweite Zeilenpixel-Array 7a, 7b zu aktivieren, zumindest zwei Pixelwerte benachbarter Pixel 7a_1, 7a_2 in dem ersten Zeilenpixel-Array 7a auszulesen und zusammenzufassen, zumindest zwei Pixelwerte von zu den zwei benachbarten Pixel 7a_1, 7a_2 in dem ersten Zeilenpixel-Array 7a korrespondierenden benachbarten Pixel 7b _1, 7b_2 in dem zweiten Zeilenpixel-Array 7b auszulesen und zusammenzufassen, die zwei zusammengefassten benachbarten Pixel 7a_1, 7a_2 in dem ersten Zeilenpixel-Array 7a und die zwei zusammengefassten benachbarten Pixel 7b_1, 7b_2 in dem zweiten Zeilenpixel-Array 7b zusammenzufassen, und einen Pixelwert basierend auf den zusammengefassten Pixelwerten zur Weiterverarbeitung bereitzustellen.

Die Steuerungsvorrichtung 9 ist ferner eingerichtet, Pixelwerte zweier benachbarter Pixel 7a_1, 7a_2 des ersten Zeilenpixel-Arrays 7a und Pixelwerte zweier benachbarter Pixel 7b_1, 7b_2 des zweiten Zeilenpixel-Arrays 7b, die zu den zwei benachbarten Pixel 7a_1, 7a_2 des ersten Zeilenpixel-Arrays 7a korrespondieren, mittels eines analogen 2x2-Binning-Verfahrens zusammenzufassen, und einen Pixelwert basierend auf den zusammengefassten Pixelwerten zur Weiterverarbeitung bereitzustellen.

Die Steuerungsvorrichtung 9 ist ferner eingerichtet, das erste und das zweite Zeilenpixel-Array 7a, 7b zu aktivieren, zumindest einen ersten Pixelwert eines ersten Pixels 7a_1 des ersten Zeilenpixel-Arrays 7a und einen ersten Pixelwert eines erstes Pixels 7b _1 des zweiten Zeilenpixel-Arrays 7b auszulesen, zumindest einen zweiten Pixelwert des zweiten Pixels 7a_2 des ersten Zeilenpixel-Arrays 7a und einen zweiten Pixelwert des zweiten Pixels 7b_2 des zweiten Zeilenpixel-Arrays 7b auszulesen, und jeweils einen Mittelwert mittels eines Line-Averaging-Aquisition-Verfahrens aus den ersten Pixelwerten und den zweiten Pixelwerten zu berechnen und jeweils einen Pixelwert zur Weiterverarbeitung bereitzustellen.

Die zweite Lichtquelle 4a kann als Auflicht-Lichtquelle zu der Lichtquelle 4 in Bezug auf eine Ebene gespiegelt angeordnet sein, die senkrecht zu der Objektebene 1 verläuft, parallel zu den Stablinsen 6 und durch eine zentrale optische Achse der Stablinsen 6 verläuft. Die Auflicht-Lichtquelle 4a kann so vorgesehen sein, dass sie die unter verschiedenen Winkeln zu einer Objektführung 1 positioniert sein kann, beispielsweise in einem Wertebereich von etwa 30 Grad bis etwa 60 Grad, beispielsweise in einem Winkel von etwa 45 Grad. Ferner kann zumindest eine Durchlicht-Lichtquelle 4b, 4c vorgesehen sein. Ferner kann zumindest eine Lichtquelle als Durchlicht-Lichtquelle betrieben werden. Die Durchlicht-Lichtquelle kann in Bezug auf eine Führungsvorrichtung 1 auf einer entgegengesetzten Seite wie die Bildebene angeordnet sein.

Die Vorrichtung 10 weist eine Reihe Stablinsen 6 oder eine Mehrzahl von Reihen von in Reihe angeordneten Stablinsen 6 aufweist, wobei die Reihen von Stablinsen 6 parallel zueinander angeordnet sind, und wobei die Reihen jeweils quer zu der Transportvorrichtung 8 angeordnet sind.

In verschiedenen Ausführungsbeispielen kann zumindest eine erste Reihe der Mehrzahl von Reihen von Stablinsen 6 zu zumindest einer weiteren Reihe der Mehrzahl von Stablinsen benachbart angeordnet sein, wobei die erste Reihe von Stablinsen 6 und die weitere Reihe von Stablinsen in einer Richtung quer zur Transportrichtung des Objekts 2 in einem vordefinierten Abstand, beispielsweise in einem Wertebereich von etwa 1 Mikrometer bis 10 Mikrometern, beispielsweise in einem Abstand von 2 Mikrometern, beispielsweise von 4 Mikrometern, beispielsweise von 7 Mikrometern, beispielsweise von 9 Mikrometern, voneinander angeordnet sein können und um einen vordefinierten Abstand, beispielsweise in einem Wertebereich von etwa 0 Mikrometern bis etwa 400 Mikrometern, beispielsweise von 130 Mikrometern bis etwa 340 Mikrometern, beispielsweise in einem Abstand von etwa 190 Mikrometern, quer zu der Transportrichtung 8 voneinander verschoben angeordnet sein können, und/oder es kann zumindest ein Zwischenraum zwischen einer Stablinse 6 und einer benachbarten Stablinse mit zumindest einem Füllmaterial, beispielsweise schwarzes Silikonwachs bzw. black silicon resin, aufgefüllt sein.

In verschiedenen Ausführungsbeispielen kann die hierin beschriebene Vorrichtung mittels eines hierin beschriebenen Verfahrens zum Verbessern der Reproduzierbarkeit von Aufnahmen betrieben werden. Das Verfahren kann aufweisen: zumindest eines aus einem Führen zumindest eines Objektes 2 auf einer Führungsvorrichtung 1 in einer Objektebene 1a mittels der Führungsvorrichtung 1, einem Transportieren des Objekts 2 auf der Führungsvorrichtung 1 in der Objektebene 1a in einer Transportrichtung 8 mittels zumindest einer Antriebsvorrichtung 3, einem Beleuchten des Objektes 2 mittels zumindest einer Lichtquelle 4, ein zumindest teilweises Streuen eines von der Lichtquelle 4 emittierten Lichts von dem Objekt 2 hin zu den Stablinsen 6, einem Weiterleiten zumindest eines Teils des Lichts, das von dem Objekt 2 gestreut wird, mittels einer Mehrzahl von Stablinsen 6, die zwischen der Objektebene 1a und einer Bildebene 5 und in einer Reihe entlang einer Richtung quer zu der Transportrichtung 8 des Objektes 2 angeordnet sind, zu einem lichtempfindlichen Zeilenpixel-Array 7, ein Steuern zumindest der Lichtquelle 4 und/oder des lichtempfindlichen Zeilenpixel-Arrays 7 mittels einer Steuerungsvorrichtung 9, wobei der lichtempfindliche Zeilenpixel-Array 7 eine Mehrzahl von eindimensionalen Zeilenpixel-Arrays 7a, 7b aufweist, die sich jeweils entlang der Richtung quer zu der Transportrichtung 8 des Objektes 2 erstrecken, parallel zueinander und benachbart angeordnet sind, und wobei jedes Zeilenpixel-Array 7a, 7b eine Länge quer zu der Transportrichtung 8 des Objektes 2 aufweist, die das zu erfassende Objekt 2 vollständig abdeckt, einem Erfassen des durch die Stablinsen 6 abgebildeten Lichts mittels zumindest eines Bereiches eines lichtempfindlichen Zeilenpixel-Arrays 7, der in der Bildebene 5 angeordnet ist, und einem Zusammenführen zumindest einzelner Pixelwerte der Mehrzahl von eindimensionalen Zeilenpixel-Arrays 7a, 7b und einem Bereitstellen eines Pixelwertes zur Weiterverarbeitung mittels der Steuerungsvorrichtung 9.

Obwohl in FIG. 2 die Transportrichtung 8 in eine erste Richtung dargestellt ist, kann die Transportrichtung 8 auch in einer zu der in FIG. 2 dargestellten Richtung entgegengesetzt sein. Die Vorrichtung 10 kann ferner eingerichtet sein, das Objekt 2 sowohl in einer ersten Transportrichtung 8 und in einer zweiten Transportrichtung zu transportieren, die der ersten Transportrichtung entgegengesetzt ist.

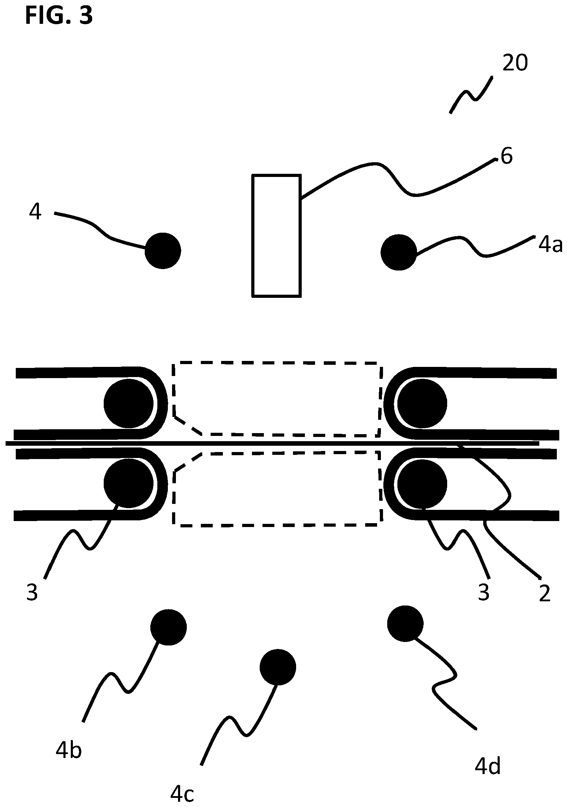

FIG. 3 ist eine schematische Darstellung einer Vorrichtung 20 zum Verbessern der Reproduzierbarkeit von Aufnahmen gemäß verschiedenen Ausführungsbeispielen.

Die in Bezug auf die FIG. 3 beschriebene Vorrichtung 20 kann zumindest ein Merkmal oder alle Merkmale der in Bezug auf die FIG. 2 beschriebenen Vorrichtung 10 aufweisen. Die in der FIG. 3 veranschaulichten Bezugszeichen entsprechenden Bezugszeichen, die in Bezug auf die FIG. 2 verwendet werden.

Die Vorrichtung 20 in FIG. 3, bei der zum besseren Verständnis bestimmte Komponenten weggelassen bzw. nicht dargestellt sind, weist eine Mehrzahl von Lichtquellen 4, 4a, 4b, 4c und 4d auf. Eine Banknote oder ein Scheck kann beispielsweise mittels einer Mehrzahl von Riemen transportiert werden, so wie es beispielshaft in der FIG. 3 veranschaulicht ist. Die Vorrichtung 20 kann beispielsweise in einem Auflicht-Betrieb betrieben werden, bei dem zumindest eine Lichtquelle 4, 4a betrieben wird, um zumindest ein Objekt 2 zu beleuchten, welches in der Vorrichtung 20 transportiert werden kann. Die Vorrichtung 20 kann beispielsweise in einem Durchlicht-Betrieb betrieben werden, bei dem zumindest eine Lichtquelle 4b, 4c, 4d betrieben wird, um das Objekt 2 zu durchleuchten. Die Lichtquelle 4b und/oder 4d kann/können beispielsweise in einem Dunkelfeld-Durchlichtbetrieb betrieben werden. Die Lichtquelle 4c kann beispielsweise in einem Hellfeld-Durchlichtbetrieb betrieben werden. Anders ausgedrückt kann zumindest eine Lichtquelle 4, 4a in Bezug auf die Objektebene auf der gleichen Seite (Auflichtmessung) angeordnet sein und/oder zumindest eine Lichtquelle 4b, 4c, 4d auf der gegenüberliegenden Seite (Durchlichtmessung) wie die Bildebene sein. Die Anordnungen der Lichtquellen 4, 4a, 4b, 4c, 4d in der FIG. 3 veranschaulichen eine mögliche Anordnung. In verschiedenen Ausführungsbeispielen können die Lichtquellen 4, 4a, 4b, 4c, 4d andere Positionen aufweisen.

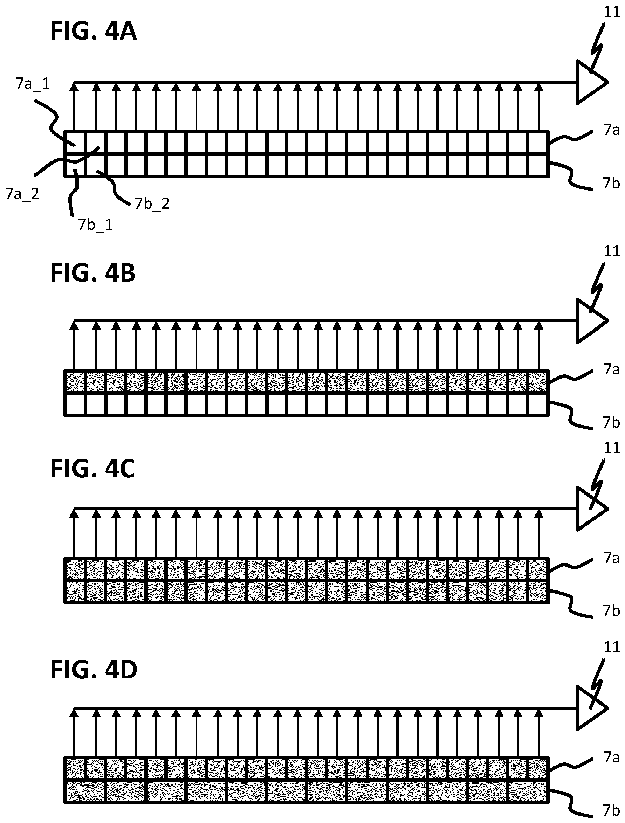

FIG. 4A, FIG. 4B, FIG. 4C, FIG. 4D sind schematische Darstellungen eines Teilbereichs einer Vorrichtung und eines Verfahrens zum Verbessern der Reproduzierbarkeit von Aufnahmen gemäß verschiedenen Ausführungsbeispielen. Die FIG. 4A, FIG. 4B, FIG. 4C und FIG. 4D zeigen jeweils ein Diagramm, das einen Contact Image Sensor 10 mit zwei eindimensionalen Zeilenpixel-Arrays 7a, 7b gemäß verschiedenen Ausführungsbeispielen schematisch veranschaulicht. Das erste Zeilenpixel-Array 7a weist eine Mehrzahl von Pixel 7a_1, 7a_2 auf. Das zweite Zeilenpixel-Array 7b weist eine Mehrzahl von Pixel 7b _1, 7b_2 auf. Jeder Pixel der Mehrzahl von Pixel 7a_1, 7a_2, 7b_1, 7b_2 kann beispielsweise mittels der Steuerungsvorrichtung 9 ausgelesen werden.

Die FIG. 4A zeigt einen Ruhezustand des Contact Image Sensors 10 mit zwei eindimensionalen Zeilenpixel-Arrays 7a, 7b gemäß verschiedenen Ausführungsbeispielen.

Die Fig. 4B zeigt einen ersten Betriebszustand (Scheck-Betrieb) des Contact Image Sensors 10 mit zwei eindimensionalen Zeilenpixel-Arrays 7a, 7b gemäß verschiedenen Ausführungsbeispielen. In dem ersten Betriebszustand ist die Steuerungsvorrichtung 9 eingerichtet, in einem Fall, bei dem das Objekt 2 zumindest ein Scheck ist, eine Auflösung des ersten Zeilenpixel-Arrays 7a auf 200 dpi einzustellen. Ferner deaktiviert die Steuerungsvorrichtung 9 das zweite Zeilenpixel-Array 7b. Die Steuerungsvorrichtung 9 steuert das erste Zeilenpixel-Array 7a an und liest die Pixelwerte des ersten Zeilenpixel-Arrays 7a aus, beispielsweise in einer intrinsischen Auflösung.

Die FIG. 4C zeigt einen zweiten Betriebszustand (Banknotenbetrieb) des Contact Image Sensor 10 mit zwei eindimensionalen Zeilenpixel-Arrays 7a, 7b gemäß verschiedenen Ausführungsbeispielen. In dem zweiten Betriebszustand ist die Steuerungsvorrichtung 9 eingerichtet, in einem Fall, bei dem das Objekt 2 zumindest eine Banknote ist, eine Auflösung des ersten Zeilenpixel-Arrays 7a und des zweiten Zeilenpixel-Arrays 7b auf 100 dpi einzustellen. Die Steuerungsvorrichtung 9 aktiviert das erste und das zweite Zeilenpixel-Array 7a, 7b und liest zumindest zwei Pixelwerte benachbarter Pixel 7a_1, 7a_2 in dem ersten Zeilenpixel-Array 7a aus und fasst diese zusammen. Die Steuerungsvorrichtung 9 ist ferner eingerichtet, zumindest zwei Pixelwerte von zu den zwei benachbarten Pixel 7a_1, 7a_2 in dem ersten Zeilenpixel-Array 7a korrespondierenden benachbarten Pixel 7b _1, 7b_2 in dem zweiten Zeilenpixel-Array 7b auszulesen und zusammenzufassen. Die Steuerungsvorrichtung 9 ist ferner eingerichtet, die zwei zusammengefassten benachbarten Pixel 7a_1, 7a_2 in dem ersten Zeilenpixel-Array 7a und die zwei zusammengefassten benachbarten Pixel 7b_1, 7b_2 in dem zweiten Zeilenpixel-Array 7b, beispielsweise mittels eines Binning-Verfahrens, zusammenzufassen und einen Pixelwert basierend auf den zusammengefassten Pixelwerten zur Weiterverarbeitung bereitzustellen.

In verschiedenen Ausführungsbeispielen ist die Steuerungsvorrichtung 9 ferner eingerichtet, Pixelwerte zweier benachbarter Pixel 7a_1, 7a_2 des ersten Zeilenpixel-Arrays 7a und Pixelwerte zweier benachbarte Pixel 7b_1, 7b_2 des zweiten Zeilenpixel-Arrays 7b, die zu den zwei benachbarten Pixel 7a_1, 7a_2 des ersten Zeilenpixel-Arrays 7a korrespondieren, mittels eines 2x2-Binning-Verfahrens zusammenzufassen und einen Pixelwert basierend auf den zusammengefassten Pixelwerten zur Weiterverarbeitung bereitzustellen. Die Steuerungsvorrichtung betreibt die beiden Zeilen mit halber Auflösung. Das Binning-Verfahren ermöglicht eine höhere Lichtempfindlichkeit pro virtuellem Bildpunkt und ein Signal-Rauschabstand kann verbessert werden und eine Zeile kann schneller ausgelesen werden.

In verschiedenen Ausführungsbeispielen ist die Steuerungsvorrichtung 9 ferner eingerichtet, das erste und das zweite Zeilenpixel-Array 7a, 7b zu aktivieren, zumindest einen ersten Pixelwert eines ersten Pixels 7a_1 des ersten Zeilenpixel-Arrays 7a und einen ersten Pixelwert eines erstes Pixels 7b_1 des zweiten Zeilenpixel-Arrays 7b auszulesen. Die Steuerungsvorrichtung 9 ist ferner eingerichtet, zumindest einen zweiten Pixelwert des zweiten Pixels 7a_2 des ersten Zeilenpixel-Arrays 7a und einen zweiten Pixelwert des zweiten Pixels 7b_2 des zweiten Zeilenpixel-Arrays 7b auszulesen und jeweils einen Mittelwert mittels eines Line-Averaging-Aquisition-Verfahrens aus den ersten Pixelwerten und den zweiten Pixelwerten zu berechnen und jeweils einen Pixelwert zur Weiterverarbeitung bereitzustellen.

Für den Banknotenbetrieb in 100 dpi werden zwei Pixel in der Zeile und zusätzlich zwei Pixel in Transportrichtung zu einem, quadratischen Pixel zusammengefasst. Damit kann auch in Transportrichtung mit 100 dpi Moiré-frei abgetastet werden, was eine höhere Verarbeitungsgeschwindigkeiten erlaubt im Vergleich zu einem konventionellen Contact Image Sensor, bei dem in Transportrichtung für jeden Farbkanal mit 200 dpi abtastet werden muss, was einen Contact Image Sensor mit höheren Zeilenrate erfordert und mehr Daten erzeugt.

Die Vorrichtung und das Verfahren zum Verbessern der Reproduzierbarkeit von Aufnahmen können ermöglichen, dass ein und derselbe Contact Image Sensor mit unterschiedlichen Auflösungen mit derselben Performance wie ein spezifisch auf diese Auflösung ausgelegter Contact Image Sensor betrieben werden kann, ohne wesentliche Erhöhung der Herstellkosten durch höhere Stückzahlen von diesem Modell. Bei einem Banknote-Leser mit einem hierin beschriebenen Contact Image Sensor kann die Auflösung im Betrieb konfiguriert werden, ohne Einbuße der Performance, verglichen mit einem Contact Image Sensor, welcher nur für die entsprechende Auflösung ausgelegt ist oder mit zwei verschiedenen ausgelegten Contact Image Sensoren, was die Kosten, Platzbedarf und Staurisiko erhöht. Eine solche Umschaltung ist nötig, wenn der Banknoten-Leser auch für den Scheck-Betrieb verwendet werden muss und/oder, wenn in der Beleuchtungssequenz Farbkanäle mit unterschiedlicher Auflösung betrieben werden.

Die Steuerungsvorrichtung 9 kann zwischen den in Bezug zu den Figuren 4B und 4C beschriebenen Betriebsmodi automatisch wechseln. Beispielsweise kann ermittelt werden, dass es sich bei dem Objekt um einen Scheck handelt. Daraufhin kann die Steuerungsvorrichtung 9 auf den in Bezug auf die FIG. 4B beschriebenen Betriebsmodus eingestellt werden. Beispielsweise kann ermittelt werden, dass es sich bei dem Objekt um eine zumindest eine Banknote handelt. Daraufhin kann die Steuerungsvorrichtung 9 auf den in Bezug auf die FIG. 4C beschriebenen Betriebsmodus eingestellt werden. Die Betriebsmodi können aber auch innerhalb der Farbsequenz wechseln.

Die einzelnen Pixelwerte können ausgelesen und mittels eines Analog-Digital-Wandlers 11 umgewandelt werden, so wie es in dem FIG. 4A bis FIG. 4D schematisch dargestellt ist.

Die FIG. 4D zeigt einen weiteren Betriebszustand eines Contact Image Sensors mit zwei eindimensionalen Zeilenpixel-Arrays 7a, 7b gemäß verschiedenen Ausführungsbeispielen. Wie in FIG. 4D schematisch veranschaulicht ist, kann zumindest ein Pixel in zumindest einem Zeilenpixel-Array quer zur Transportrichtung breiter als ein Pixel in zumindest einem weiteren Zeilenpixel-Array ausgeführt sein. Beispielsweise kann ein Pixel in einem ersten Zeilenpixel-Array in Bezug auf einen entsprechenden Pixel in einem zweiten Zeilenpixel-Array um beispielsweise etwa den Faktor 1,5 bis etwa den Faktor 3,5, beispielsweise um einen Faktor 2 breiter sein. Anders ausgedrückt kann eine Pixelbreite quer zur Transportrichtung eines Objektes in einer ersten Zeile doppelt so breit ausgeführt sein in Bezug auf eine Pixelbreite in einer zweiten Zeilen. Anders ausgedrückt kann ein erster Pixel einer Zeile eine Breite quer zur Transportrichtung eines Objektes aufweisen, die zwei Pixel in einer benachbarten Zeile zusammen quer zur Transportrichtung aufweisen. Eine Breite quer zur Transportrichtung eines Pixels in einem ersten Zeilenpixel-Array 7a und eines Pixels in einem zweiten Zeilenpixel-Array 7b kann beispielsweise 127 Mikrometer sein. In Bezug auf die FIG. 4D kann eine Breite quer zur Transportrichtung eines Pixels in einem ersten Zeilenpixel-Array 7a beispielsweise 127 Mikrometer sein und eine Breite quer zur Transportrichtung eines Pixels in einem zweiten Zeilenpixel-Array 7b kann beispielsweise 254 Mikrometer sein.

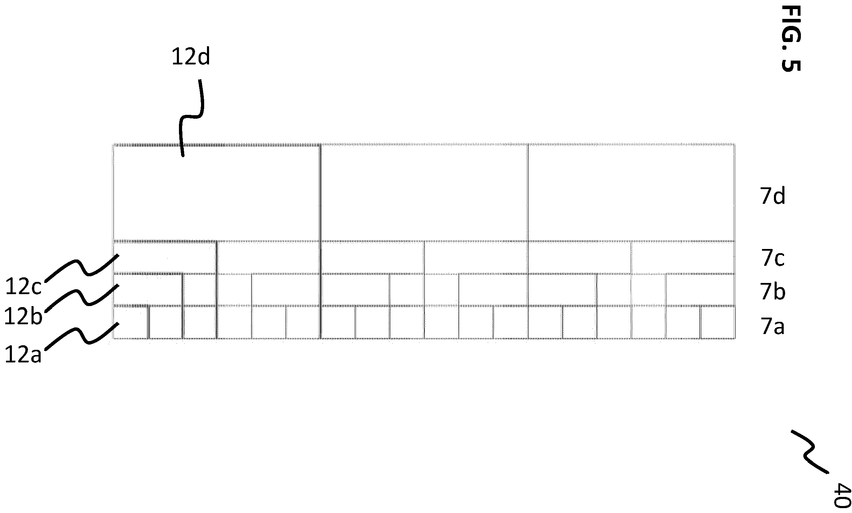

FIG. 5 ist eine schematische Darstellung eines Teilbereichs 40 einer Vorrichtung zum Verbessern der Reproduzierbarkeit von Aufnahmen gemäß verschiedenen Ausführungsbeispielen.

Die FIG. 5 veranschaulicht beispielhaft einen Teilbereich 40 eines Moiré-freien Contact Image Sensors in 100, 200, 300 und 600 dots per inch Auflösung. Bei einer Vorrichtung 10, 20 zum Verbessern der Reproduzierbarkeit von Aufnahmen kann zumindest ein Pixel in zumindest einem Zeilenpixel-Array breiter als ein Pixel in zumindest einem weiteren Zeilenpixel-Array ausgeführt ist. Insbesondere weist eine erste Zeile eine Mehrzahl von Pixel der gleichen Größe auf (siehe Pixelfolge in Zeile 7a in FIG. 5). Eine benachbarte Zeile weist Pixel unterschiedlicher Breite auf, nämlich Pixel, die doppelt so breit sind wie Pixel der ersten Zeile. Insbesondere weist eine zweite Zeilen eine Pixelfolge auf von: Pixel mit Pixelbreite von zwei Pixeln, Pixel mit Pixelbreite von einem Pixel der ersten Zeile, Pixel mit Pixelbreite von einem Pixel, Pixel mit Pixelbreite von zwei Pixeln (siehe Pixelfolge in Zeile 7b in FIG. 5). Diese Folge wiederholt sich in der zweiten Zeile. In einer dritten Zeile weist ein Pixel eine Pixelbreite auf von: Pixel mit Pixelbreite von drei Pixeln der ersten Zeile. Diese Pixelbreite kann sich in der dritten Zeile wiederholen (siehe Pixelfolge in Zeile 7c in FIG. 5). In einer vierten Zeile kann ein Pixel eine Pixelbreite von sechs Pixeln der ersten Zeile aufweisen. Diese Breite kann sich in der vierten Zeile wiederholen (siehe Pixelfolge in Zeile 7d in FIG. 5). Die Höhe der Pixel der vierten Zeile kann beispielsweise drei Pixelhöhen der Pixel der ersten Zeile sein.

Eine untere Zeile 7a kann für 600 dots per inch ausgelegt sein, siehe 12a. Wenn eine Auflösung von 300 dots per inch erfasst werden sollen, kann eine Pixelfläche mittels eines analogen Binnings zu der Pixelfläche 12b vergrößert werden. Wenn eine Auflösung von 200 dots per inch erfasst werden sollen, kann eine Pixelfläche mittels eines analogen Binnings zu einer Pixelfläche 12c vergrößert werden. Wenn eine Auflösung von 100 dots per inch erfasst werden sollen, kann eine Pixelfläche mittels eines analogen Binnings zu einer Pixelfläche 12d vergrößert werden. Anders ausgedrückt können Pixel so zusammengefasst werden, sodass zumindest ein größerer Pixel entstehen kann. Anders ausgedrückt kann eine Mehrzahl von Pixel in zumindest einer Zeile oder in einer Mehrzahl von Zeilen so zusammengefasst werden, dass eine jeweilige Auflösung, beispielsweise 100 dots per inch, realisiert werden kann. Für eine 300 dots per inch Auflösung können in einer ersten Zeile zwei benachbarte Pixel zusammengeschaltet werden und in einer zweiten Zeile korrespondierende Pixel zusammengeschaltet werden (siehe 12b), die wiederum gemeinsam zusammengeschaltet werden können, so wie es schematisch in der FIG. 5 veranschaulicht ist. Jede in der FIG. 5 gezeigte Pixelfläche 12b, 12c, 12d kann mittels eines analogen Binning-Verfahrens einzeln beschaltet bzw. zusammengefasst werden.

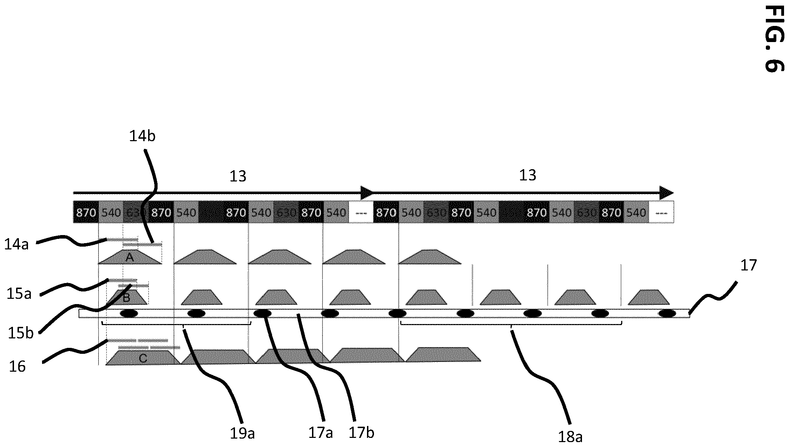

Die FIG. 6 ist eine schematische Darstellung eines Teilbereichs einer Vorrichtung und eines Verfahrens zum Verbessern der Reproduzierbarkeit von Aufnahmen gemäß verschiedenen Ausführungsbeispielen.

Die FIG. 6 veranschaulicht eine Beleuchtungssequenz, bei der ein Contact Image Sensor beispielsweise auf eine Auflösung von 200 dpi ausgelegt sein kann. Der in FIG. 6 veranschaulichte Contact Image Sensor kann beispielsweise ein hierin beschriebener Contact Image Sensor sein. Die Strecken 13 in der FIG. 6 können beispielsweise eine Länge von beispielsweise etwa 1016 Mikrometer haben. Ein Pitch, d.h. eine Schrittweite zwischen benachbarten Pixel quer zur Transportrichtung, kann beispielsweise etwa 127 Mikrometer in dem eindimensionalen Pixelarray 7a, 7b sein. Eine Ausdehnung eines Pixels in Transportrichtung 8 kann dann die 127 Mikrometer nicht überschreiten, sonst würde die Auflösung in Transportrichtung schlechter werden. Das bedeutet, in Transportrichtung 8 erfasst der Pixel 7a instantan 127 Mikrometer, wenn die Stablinse 6 perfekt abbilden könnte. Die Strecke 14a, beispielsweise mit einer Länge von etwa 127 Mikrometern, stellt eine Strecke dar zu einem Zeitpunkt, wenn zumindest eine der Lichtquellen 4, 4a, 4b, 4c, 4d, beispielsweise eine LED, eingeschaltet wird.

Während der Aufnahme der ersten Zeile, beispielsweise eine Grün-Zeile, bewegt sich das Objekt 2, beispielsweise eine Banknote, in Transportrichtung 8. Am Ende der Aufnahme der ersten Zeile ist der Aufnahmeort um etwa 1016 Mikrometer dividiert durch 12 verschoben (siehe die Strecke 14b in FIG. 6). Die Sensitivität eines idealen Contact Image Sensors 10 und/oder eines Zeilenpixel-Arrays 7 in Transportrichtung 8 ist durch die Trapeze A in der FIG. 6 beschrieben. Effektiv kann die Pixelgröße in Transportrichtung 8 bei einem Contact Image Sensor und/oder bei einem lichtempfindlichen Zeilenpixel-Array jedoch etwa nur 99 Mikrometer sein. Deshalb sind die Strecken 15a, 15b in FIG. 6 kürzer. Ferner kann die Beleuchtung wegen Timing-Restriktionen und um Variationen auszugleichen, nicht während der ganzen Zeilendauer stattfinden, sondern startet nach Zeilenstart und endet vor dem Zeilenende und hat deshalb einen DutyCycle deutlich kleiner als eins. Hierin wird unter DutyCycle ein Verhältnis zwischen Beleuchtungsdauer und der inversen Zeilenrate verstanden. Eine inverse Zeilenrate kann als eine Zeilenzeit verstanden werden, beispielsweise als 1.016 Mikrometer/(12*v), wobei v eine Geschwindigkeit angibt. Deshalb decken die Strecken 15a und 15b einen kleineren Bereich ab als gewünscht, bzw. sind die Flanken des Trapezes B steiler. Die reale Sensitivität beispielsweise eines Grünkanals in Transportrichtung 8 ist durch die Trapeze B in der FIG. 6 beschrieben. Damit kann das Entstehen des Moiré-Effektes erklärt werden, beispielsweise für periodische oder fast-periodische Druck-Strukturen, welche in der Regel bei Linien, welche absorbieren bzw. nicht absorbieren, auftreten, welche eine ähnliche Frequenz wie die Abtastung haben. Wenn das sensitive Gebiet auf die absorbierende Druckstruktur fällt, erscheint dieses als dunkel. Dies ist beispielsweise mittels einer periodischen Struktur 17 für die absorbierenden Teile 17a für den Grün-Kanal mit der Sensitivität B im Bereich 19a in der FIG. 6 dargestellt. Wenn das sensitive Gebiet auf die nicht absorbierenden Teile der Struktur fällt, erscheint dieses als hell. Dies ist beispielsweise mittels einer periodischen hellen Struktur 17b im Bereich 18a in der FIG. 6 dargestellt. Bei mehrmaliger Aufnahme der Banknote kann bei einem untersuchten Gebiet das eine Mal die absorbierende und ein anderes Mal die nicht absorbierende Struktur auf das sensitive Gebiet fallen, wenn z.B. die Raster nur wenig gegeneinander verschoben sind.

In verschiedenen Ausführungsbeispielen kann sich, wenn in Transportrichtung 8 zumindest ein zweiter, annähernd identischer Pixel eines zweiten eindimensionalen Zeilenpixel-Arrays 7b zur Verfügung steht, um den Moiré-Effekt zu entfernen, und mit dem ersten Pixel eines ersten eindimensionalen Zeilenpixel-Arrays 7a beispielsweise ein Binning durchgeführt wird (Bezugszeichen 16 in FIG. 6), eine Sensitivität beispielsweise eines Grünkanals in Transportrichtung 8 wie durch die Trapeze C in der FIG. 6 beschrieben einstellen. Die Lücken in der Sensitivität, wie bei den Trapezen A und B in der FIG. 6 beobachtet, sind nun praktisch verschwunden.

In verschiedenen Ausführungsbeispielen kann, wenn der zweite Pixel in Transportrichtung 8 etwas länger ist als der erste Pixel in Transportrichtung 8, beispielsweise um etwa einen Faktor in einem Bereich von etwa 1,5 bis etwa 1,7, beispielsweise um etwa einen Faktor 1,57 länger ist, die Sensitivität über die Transportstrecke 8 (bzw. über die Banknote) annähernd konstant sein. Damit kann kein Moiré-Effekt mehr auftreten.

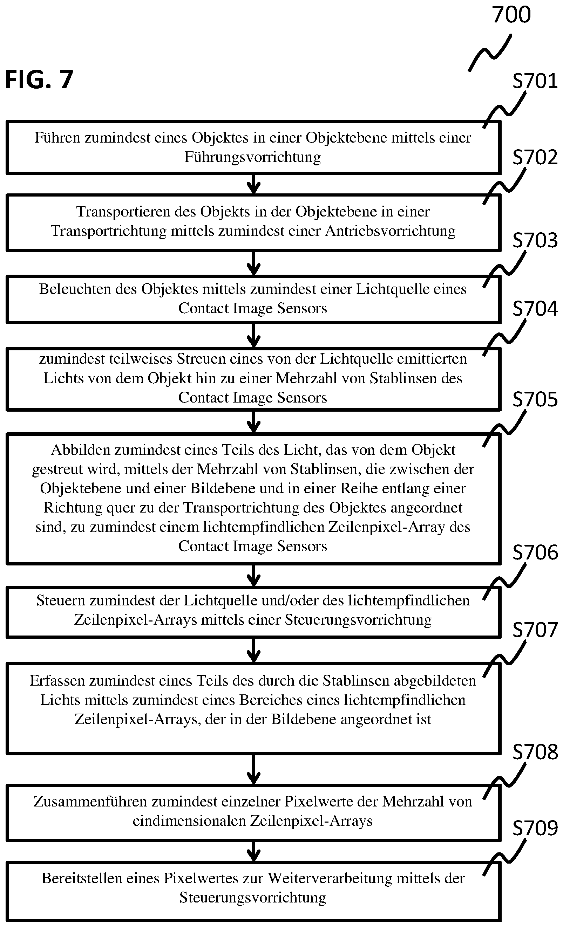

Die FIG. 7 ist ein Ablaufdiagramm, welches schematisch ein Verfahren zum Verbessern der Reproduzierbarkeit von Aufnahmen gemäß verschiedenen Ausführungsbeispielen veranschaulicht.

Das Verfahren zum Verbessern der Reproduzierbarkeit von Aufnahmen kann zumindest eines aus dem Folgenden aufweisen: Führen zumindest eines Objektes in einer Objektebene mittels einer Führungsvorrichtung (S701); Transportieren des Objekts in der Objektebene in einer Transportrichtung mittels zumindest einer Antriebsvorrichtung (S702); Beleuchten des Objektes mittels zumindest einer Lichtquelle eines Contact Image Sensors (S703); zumindest teilweises Streuen eines von der Lichtquelle emittierten Lichts von dem Objekt hin zu einer Mehrzahl von Stablinsen des Contact Image Sensors (S704); Abbilden zumindest eines Teils des Licht, das von dem Objekt gestreut wird, mittels der Mehrzahl von Stablinsen, die zwischen der Objektebene und einer Bildebene und in einer Reihe entlang einer Richtung quer zu der Transportrichtung des Objektes angeordnet sind, zu zumindest einem lichtempfindlichen Zeilenpixel-Array des Contact Image Sensors (S705); Steuern zumindest der Lichtquelle und/oder des lichtempfindlichen Zeilenpixel-Arrays mittels einer Steuerungsvorrichtung (S706), wobei der lichtempfindliche Zeilenpixel-Array eine Mehrzahl von eindimensionalen Zeilenpixel-Arrays aufweist, die sich jeweils entlang der Richtung quer zu der Transportrichtung des Objektes erstrecken, parallel zueinander und benachbart angeordnet sind, und wobei jedes Zeilenpixel-Array eine Länge quer zu der Transportrichtung des Objektes aufweist, die das zu erfassende Objekt vollständig abdeckt, Erfassen zumindest eines Teils des durch die Stablinsen abgebildeten Lichts mittels zumindest eines Bereiches eines lichtempfindlichen Zeilenpixel-Arrays, der in der Bildebene angeordnet ist (S707), Zusammenführen zumindest einzelner Pixelwerte der Mehrzahl von eindimensionalen Zeilenpixel-Arrays (S708) und Bereitstellen eines Pixelwertes zur Weiterverarbeitung mittels der Steuerungsvorrichtung (S709).

In verschiedenen Ausführungsbeispielen kann das Verfahren ferner Merkmale umfassen, die in Bezug auf die FIG. 1, FIG. 2, FIG. 3, FIG. 4, FIG. 5 und/oder FIG. 6 beschrieben sind. Die in Bezug auf die hierin beschriebenen Ausführungsbeispiele der Vorrichtung beschriebenen Vorteile beziehen sich ebenso auf die hierin beschriebenen Ausführungsbeispiele des Verfahrens und umgekehrt.

Weitere vorteilhafte Ausgestaltungen der Verfahren ergeben sich aus der Beschreibung der hierin beschriebenen Vorrichtungen und umgekehrt.

## Patentansprüche

1. Vorrichtung zum Verbessern der Reproduzierbarkeit von Aufnahmen aufweisend:
eine Führungsvorrichtung (1), die eingerichtet ist, zumindest ein Objekt (2) in einer Objektebene (1a) zu führen;
zumindest eine Antriebsvorrichtung (3), die eingerichtet ist, das Objekt (2) in der Objektebene (1a) in einer Transportrichtung (8) zu transportieren,
eine Bildebene (5);
zumindest einen Contact Image Sensor mit zumindest einer Lichtquelle (4) zum Beleuchten des Objektes (2),
einer Mehrzahl von Stablinsen (6), die zwischen der Objektebene (1a) und der Bildebene (5) und in einer Reihe entlang einer Richtung quer zu der Transportrichtung (8) des Objektes (2) angeordnet sind, und
zumindest einem lichtsensitiven Zeilenpixel-Array (7), der in der Bildebene (5) angeordnet ist;
eine Steuerungsvorrichtung (9), die eingerichtet ist, zumindest die Lichtquelle (4) und/oder den lichtsensitiven Zeilenpixel-Array (7) zu steuern und ein von dem lichtsensitiven Zeilenpixel-Array (7) erzeugtes Signal zu erfassen,
wobei ein von der Lichtquelle (4) emittiertes Licht zumindest teilweise von dem Objekt (2) hin zu den Stablinsen (6) gestreut wird, mittels der Stablinsen (6) abgebildet wird und auf zumindest einen Bereich des lichtempfindlichen Zeilenpixel-Arrays (7) trifft,
wobei der lichtempfindliche Zeilenpixel-Array (7) eine Mehrzahl von eindimensionalen Zeilenpixel-Arrays (7a, 7b) aufweist, die sich jeweils entlang der Richtung quer zu der Transportrichtung (8) des Objektes (2) erstrecken, parallel zueinander und benachbart angeordnet sind,
wobei jedes Zeilenpixel-Array (7a, 7b) eine Länge quer zu der Transportrichtung (8) des Objektes (2) aufweist, die das zu erfassende Objekt (2) vollständig abdeckt, und
wobei die Mehrzahl von eindimensionalen Zeilenpixel-Arrays (7a, 7b) aufweist:
- eine erste Zeile von Pixel der gleichen Größe,
- eine dazu benachbarte zweite Zeile einer sich wiederholenden Folge von Pixel voneinander unterschiedlicher Pixelbreite quer zu der Transportrichtung (8), welche ein Pixel der Pixelbreite von zwei Pixeln der ersten Zeile, ein Pixel der Pixelbreite von einem Pixel der ersten Zeile, ein Pixel der Pixelbreite von einem Pixel der ersten Zeile und ein Pixel der Pixelbreite von zwei Pixeln der ersten Zeile aufweist und sechs Pixel der ersten Zeile überlappt,
- eine dritte Zeile von Pixel, welche Pixel mit einer Breite von drei Pixeln der ersten Zeile aufweist, so dass diese jeweils von der zweiten Zeile überlappen: ein Pixel der Pixelbreite von zwei Pixeln der ersten Zeile und ein Pixel der Pixelbreite von einem Pixel der ersten Zeile.

2. Vorrichtung nach Anspruch 1, wobei jedes Zeilenpixel-Array (7a, 7b) eine Mehrzahl von Pixel (7a_1, 7a_2, 7b_1, 7b_2) aufweist, und jeder Pixel (7a_1, 7a_2, 7b_1, 7b_2) zumindest eine Fotodiode in CMOS- oder CCD-Bauweise zum Erfassen eines Pixelwertes des aus der Lichtquelle (4) emittierten Lichts aufweist, und/oder wobei eine Anzahl der Zeilenpixel-Arrays (7a, 7b) kleiner als eine Anzahl der Pixel (7a_1, 7a_2; 7b_1, 7b_2) in jedem Zeilenpixel-Array (7a; 7b) ist.

3. Vorrichtung nach Anspruch 1 oder 2, wobei Pixel aus verschiedenen Zeilen mittels analogen Binnings so zusammengefasst werden können, dass verschiedene Auflösungen implementiert werden können.

4. Vorrichtung nach einem der vorhergehenden Ansprüche, wobei die Steuerungsvorrichtung (9) ferner eingerichtet ist, die erste Zeile (7a) und die zweite Zeile (7b) voneinander unabhängig zu betreiben, und wobei die Steuerungsvorrichtung (9) eingerichtet ist, die zweite Zeile (7b) zu der ersten Zeile (7a) zuzuschalten.

5. Vorrichtung nach einem der vorherigen Ansprüche, wobei die Pixel der ersten Zeile eine Auflösung in der Richtung quer zu der Transportrichtung (8) von 600 dpi aufweisen
- und, wenn eine Auflösung von 300 dpi erfasst werden soll, mittels analogen Binnings zu einer Pixelfläche (12b) zusammengefasst werden, welche Pixel der zweiten Zeile aufweist;
- und, wenn eine Auflösung von 200 dpi erfasst werden soll, mittels analogen Binnings zu einer Pixelfläche (12c) zusammengefasst werden, welche Pixel der zweiten und dritten Zeile aufweist.

6. Vorrichtung nach einem der vorherigen Ansprüche, wobei ein Pixel der Mehrzahl von Zeilenpixel-Arrays (7a, 7b) eine Größe von 127 Mikrometern mal 127 Mikrometern aufweist.

7. Vorrichtung nach einem der vorherigen Ansprüche, wobei die Mehrzahl von eindimensionalen Zeilenpixel-Arrays (7a, 7b) eine vierte Zeile von Pixel einer Pixelbreite von sechs Pixeln der ersten Zeile aufweist, welche jeweils zwei Pixel der dritten Zeile überlappen.

8. Vorrichtung nach Anspruch 7, wobei die vierte Zeile eine Auflösung in der Richtung quer zu der Transportrichtung (8) von 100 dpi aufweist und, wenn eine Auflösung von 100 dpi erfasst werden soll, mittels analogen Binnings zu einer Pixelfläche (12d) zusammengefasst werden, welche Pixel zweiten, dritten und vierten Zeile aufweist.

9. Vorrichtung nach einem der Ansprüche 1 bis 6, wobei die Steuerungsvorrichtung (9) ferner eingerichtet ist,
Pixelwerte zweier benachbarter Pixel (7a_1, 7a_2) des ersten Zeile (7a) und zumindest einen Pixelwert eines benachbarten Pixel (7b_1; 7b_2) der zweiten Zeile (7b) mittels eines analogen Binning-Verfahrens zusammenzufassen, und
einen Pixelwert basierend auf den zusammengefassten Pixelwerten zur Weiterverarbeitung bereitzustellen.

10. Vorrichtung nach einem der vorherigen Ansprüche, wobei die Steuerungsvorrichtung (9) ferner eingerichtet ist,
die erste und die zweite Zeile (7a, 7b) zu aktivieren,
zumindest einen ersten Pixelwert eines ersten Pixels (7a_1) der ersten Zeilen (7a) und einen ersten Pixelwert eines erstes Pixels (7b_1) der zweiten Zeilen (7b) auszulesen,
zumindest einen zweiten Pixelwert des zweiten Pixels (7a_2) der ersten Zeile (7a) und einen zweiten Pixelwert des zweiten Pixels (7b_2) der zweiten ZeileArrays (7b) auszulesen,
und jeweils einen Mittelwert mittels eines Line-Averaging-Aquisition-Verfahrens aus den ersten Pixelwerten und den zweiten Pixelwerten zu berechnen und jeweils einen Pixelwert zur Weiterverarbeitung bereitzustellen.

11. Vorrichtung nach einem der vorherigen Ansprüche, wobei die Vorrichtung (10) zumindest eine zweite Lichtquelle (4a) zum Beleuchten des Objektes (2) aufweist, wobei die zweite Lichtquelle (4a) zu der Lichtquelle (4) auf einer in Bezug auf die Mehrzahl von Stablinsen (6) entgegengesetzten Seite angeordnet ist, und/oder die Stablinsen (6) Gradienten-Index-Stablinsen sind.

12. Vorrichtung nach einem der vorherigen Ansprüche, wobei die Vorrichtung (10) eine Mehrzahl von Reihen von in Reihe angeordneten Stablinsen (6) aufweist,
wobei die Reihen von Stablinsen (6) parallel zueinander angeordnet sind, und
wobei die Reihen jeweils quer zu der Transportvorrichtung (8) angeordnet sind.

13. Vorrichtung nach Anspruch 12, wobei zumindest eine erste Reihe der Mehrzahl von Reihen von Stablinsen (6) zu zumindest einer weiteren Reihe der Mehrzahl von Stablinsen benachbart angeordnet ist,
wobei die erste Reihe von Stablinsen (6) und die weitere Reihe von Stablinsen in einer Richtung quer zur Transportrichtung des Objekts (2) in einem vordefinierten Abstand voneinander angeordnet sind und um einen vordefinierten Abstand quer zu der Transportrichtung (8) voneinander verschoben angeordnet ist, und/oder
zumindest ein Zwischenraum zwischen einer Stablinse (6) und einer benachbarten Stablinse (6) mit zumindest einem Füllmaterial aufgefüllt ist.

14. Verfahren zum Verbessern der Reproduzierbarkeit von Aufnahmen, das Verfahren aufweisend:
Führen zumindest eines Objektes (2) in einer Objektebene (1a) mittels einer Führungsvorrichtung (1);
Transportieren des Objekts (2) in der Objektebene (1a) in einer Transportrichtung (8) mittels zumindest einer Antriebsvorrichtung (3);
Beleuchten des Objektes (2) mittels zumindest einer Lichtquelle (4) eines Contact Image Sensors;
zumindest teilweises Streuen eines von der Lichtquelle (4) emittierten Lichts von dem Objekt (2) hin zu einer Mehrzahl von Stablinsen (6) des Contact Image Sensors;
Abbilden zumindest eines Teils des Licht, das von dem Objekt (2) gestreut wird, mittels der Mehrzahl von Stablinsen (6), die zwischen der Objektebene (1a) und einer Bildebene (5) und in einer Reihe entlang einer Richtung quer zu der Transportrichtung (8) des Objektes (2) angeordnet sind, zu zumindest einem lichtempfindlichen Zeilenpixel-Array (7) des Contact Image Sensors;
Steuern zumindest der Lichtquelle (4) und/oder des lichtempfindlichen Zeilenpixel-Arrays (7) mittels einer Steuerungsvorrichtung (9),
wobei der lichtempfindliche Zeilenpixel-Array (7) eine Mehrzahl von eindimensionalen Zeilenpixel-Arrays (7a, 7b) aufweist, die sich jeweils entlang der Richtung quer zu der Transportrichtung (8) des Objektes (2) erstrecken, parallel zueinander und benachbart angeordnet sind, und
wobei jedes Zeilenpixel-Array (7a, 7b) eine Länge quer zu der Transportrichtung (8) des Objektes (2) aufweist, die das zu erfassende Objekt (2) vollständig abdeckt,
Erfassen zumindest eines Teils des durch die Stablinsen (6) abgebildeten Lichts mittels zumindest eines Bereiches eines lichtempfindlichen Zeilenpixel-Arrays (7), der in der Bildebene (5) angeordnet ist, und
Zusammenführen zumindest einzelner Pixelwerte der Mehrzahl von eindimensionalen Zeilenpixel-Arrays (7a, 7b) und Bereitstellen eines Pixelwertes zur Weiterverarbeitung mittels der Steuerungsvorrichtung (9),
wobei die Mehrzahl von eindimensionalen Zeilenpixel-Arrays (7a, 7b) aufweist:
- eine erste Zeile von Pixel der gleichen Größe,
- eine dazu benachbarte zweite Zeile einer sich wiederholenden Folge von Pixel voneinander unterschiedlicher Pixelbreite quer zu der Transportrichtung (8), welche ein Pixel der Pixelbreite von zwei Pixeln der ersten Zeile, ein Pixel der Pixelbreite von einem Pixel der ersten Zeile, ein Pixel der Pixelbreite von einem Pixel der ersten Zeile und ein Pixel der Pixelbreite von zwei Pixeln der ersten Zeile aufweist und sechs Pixel der ersten Zeile überlappt,
- eine dritte Zeile von Pixel, welche Pixel mit einer Breite von drei Pixeln der ersten Zeile aufweist, so dass diese jeweils von der zweiten Zeile überlappen: ein Pixel der Pixelbreite von zwei Pixeln der ersten Zeile und ein Pixel der Pixelbreite von einem Pixel der ersten Zeile.

## Claims

1. Device for improving the reproducibility of recordings, comprising:
a guide device (1) configured to guide at least one object (2) in an object plane (1a);
at least one drive device (3) configured to transport the object (2) in the object plane (1a) in a transportation direction (8),
an image plane (5);
at least one contact image sensor having at least one light source (4) for illuminating the object (2),
a plurality of rod lenses (6) which are arranged between the object plane (1a) and the image plane (5) and in a row along a direction across the transportation direction (8) of the object (2), and
at least one light-sensitive line pixel array (7) arranged in the image plane (5);
a control device (9) configured to control at least the light source (4) and/or the light-sensitive line pixel array (7) and to acquire a signal generated by the light-sensitive line pixel array (7),
wherein a light emitted by the light source (4) is, at least in part, scattered from the object (2) towards the rod lenses (6), is imaged by means of the rod lenses (6) and is incident on at least one region of the light-sensitive line pixel array (7),
wherein the light-sensitive line pixel array (7) comprises a plurality of one-dimensional line pixel arrays (7a, 7b), which each extend in the direction across the transportation direction (8) of the object (2) and are arranged parallel to one another and adjacently, wherein each line pixel array (7a, 7b) has a length across the transportation direction (8) of the object (2) which completely covers the object (2) to be captured, and
wherein the plurality of one-dimensional line pixel arrays (7a, 7b) comprise:
- a first line of pixels of the same size,
- a second line, adjacent thereto, of a repeating sequence of pixels with different pixel widths across the transportation direction (8), which comprises a pixel with the pixel width of two pixels of the first line, a pixel with the pixel width of one pixel of the first line, a pixel with the pixel width of one pixel of the first line and a pixel with the pixel width of two pixels of the first line and which overlaps six pixels of the first line,
- a third line of pixels which comprises pixels with a width of three pixels of the first line, with the result that each of these overlap the following from the second line: a pixel with the pixel width of two pixels of the first line and a pixel with the pixel width of one pixel of the first line.

2. Device according to Claim 1, wherein each line pixel array (7a, 7b) comprises a plurality of pixels (7a_1, 7a_2, 7b_1, 7b_2) and each pixel (7a_1, 7a_2, 7b_1, 7b_2) comprises at least one CMOS-type or CCD-type photodiode for acquiring a pixel value of the light emitted by the light source (4), and/or wherein a number of line pixel arrays (7a, 7b) is smaller than a number of pixels (7a_1, 7a_2; 7b_1, 7b_2) in each line pixel array (7a; 7b).

3. Device according to Claim 1 or 2, wherein pixels from different lines can be combined by means of analogue binning such that different resolutions can be implemented.

4. Device according to any of the preceding claims, wherein the control device (9) is further configured to operate the first line (7a) and the second line (7b) independently of one another, and wherein the control device (9) is configured to connect the second line (7b) to the first line (7a).

5. Device according to any of the preceding claims, wherein the pixels of the first line have a resolution in the direction across the transportation direction (8) of 600 dpi
- and, if a resolution of 300 dpi should be captured, they are combined by means of analogue binning to form a pixel area (12b) which has pixels of the second line;
- and, if a resolution of 200 dpi should be captured, they are combined by means of analogue binning to form a pixel area (12c) which has pixels of the second and third lines.

6. Device according to any of the preceding claims, wherein a pixel of the plurality of line pixel arrays (7a, 7b) has a size of 127 micrometres times 127 micrometres.

7. Device according to any of the preceding claims, wherein the plurality of one-dimensional line pixel arrays (7a, 7b) comprise a fourth line of pixels with a pixel width of six pixels of the first line, which each overlap two pixels of the second line.

8. Device according to Claim 7, wherein the fourth line has a resolution in the direction across the transportation direction (8) of 100 dpi and, if a resolution of 100 dpi should be acquired, they are combined by means of analogue binning to form a pixel area (12d) which has pixels of the second, third and fourth lines.

9. Device according to any of Claims 1 to 6, wherein the control device (9) is further configured
to combine pixel values of two adjacent pixels (7a_1, 7a_2) of the first line (7a) and at least one pixel value of an adjacent pixel (7b_1; 7b_2) of the second line (7b) by means of an analogue binning method, and
to provide a pixel value on the basis of the combined pixel values for further processing.

10. Device according to any of the preceding claims, wherein the control device (9) is further configured
to activate the first and the second line (7a, 7b),
to read out at least a first pixel value from a first pixel (7a_1) of the first lines (7a) and a first pixel value from a first pixel (7b_1) of the second lines (7b),
to read out at least a second pixel value from the second pixel (7a_2) of the first line (7a) and a second pixel value from the second pixel (7b_2) of the second line array (7b),
and to calculate in each case a mean value from the first pixel values and the second pixel values by means of a line averaging acquisition method and to provide in each case a pixel value for further processing.

11. Device according to any of the preceding claims, wherein the device (10) comprises at least a second light source (4a) for illuminating the object (2), the second light source (4a) being arranged on an opposite side to the light source (4) in relation to the plurality of rod lenses (6), and/or the rod lenses (6) are gradient index rod lenses.

12. Device according to any of preceding claims, wherein the device (10) comprises a plurality of rows of rod lenses (6) arranged in rows, wherein the rows of rod lenses (6) are arranged parallel to one another, and wherein the rows are arranged across the transportation device (8) in each case.

13. Device according to Claim 12, wherein at least a first row of the plurality of rows of rod lenses (6) is arranged adjacent to at least a further row of the plurality of rod lenses,
wherein the first row of rod lenses (6) and the further row of rod lenses are arranged at a predefined distance from one another in a direction across the transportation direction of the object (2) and are displaced relative to one another by a predefined distance across the transportation direction (8), and/or
at least one intermediate space between a rod lens (6) and an adjacent rod lens (6) is filled with at least one filling material.

14. Method for improving the reproducibility of recordings, the method comprising:
guiding at least one object (2) in an object plane (1a) by means of a guide device (1);
transporting the object (2) in the object plane (1a) in a transportation direction (8) by means of at least one drive device (3);
illuminating the object (2) by means of at least one light source (4) of a contact image sensor;
at least partial scattering of a light emitted by the light source (4) from the object (2) to a plurality of rod lenses (6) of the contact image sensor;
imaging at least some of the light scattered by the object (2), by means of the plurality of rod lenses (6) which are arranged between the object plane (1a) and an image plane (5) and in a row along a direction across the transportation direction (8) of the object (2), to at least one light-sensitive line pixel array (7) of the contact image sensor;
controlling at least the light source (4) and/or the light-sensitive line pixel array (7) by means of a control device (9),
wherein the light-sensitive line pixel array (7) comprises a plurality of one-dimensional line pixel arrays (7a, 7b), which each extend in the direction across the transportation direction (8) of the object (2) and are arranged parallel to one another and adjacently, and
wherein each line pixel array (7a, 7b) has a length across the transportation direction (8) of the object (2) which completely covers the object (2) to be captured,
capturing at least some of the light imaged by the rod lenses (6) by means of at least one region of a light-sensitive line pixel array (7) arranged in the image plane (5), and
bringing together at least individual pixel values from the plurality of one-dimensional line pixel arrays (7a, 7b) and providing a pixel value for further processing by means of the control device (9),
wherein the plurality of one-dimensional line pixel arrays (7a, 7b) comprise:
- a first line of pixels of the same size,
- a second line, adjacent thereto, of a repeating sequence of pixels with different pixel widths across the transportation direction (8), which comprises a pixel with the pixel width of two pixels of the first line, a pixel with the pixel width of one pixel of the first line, a pixel with the pixel width of one pixel of the first line and a pixel with the pixel width of two pixels of the first line and which overlaps six pixels of the first line,
- a third line of pixels which comprises pixels with a width of three pixels of the first line, with the result that each of these overlap the following from the second line: a pixel with the pixel width of two pixels of the first line and a pixel with the pixel width of one pixel of the first line.

## Revendications

1. Dispositif d'amélioration de la reproductibilité des enregistrements comportant :
un dispositif de guidage (1) qui est conçu pour guider au moins un objet (2) dans un plan objet (1a) ;
au moins un dispositif d'entraînement (3) qui est conçu pour transporter l'objet (2) dans le plan objet (1a) dans une direction de transport (8),
un plan image (5) ;
au moins un capteur d'image de contact doté d'au moins une source lumineuse (4) pour éclairer l'objet (2),
une pluralité de lentilles barreaux (6) qui sont disposées entre le plan objet (1a) et le plan image (5) et en une rangée le long d'une direction transversale à la direction de transport (8) de l'objet (2), et
au moins un réseau de pixels de ligne (7) photosensible qui est disposé dans le plan image (5) ;
un dispositif de commande (9) qui est conçu pour commander au moins la source lumineuse (4) et/ou le réseau de pixels de ligne (7) photosensible et pour détecter un signal généré par le réseau de pixels de ligne (7) photosensible,
dans lequel une lumière émise par la source lumineuse (4) est au moins partiellement diffusée par l'objet (2) vers les lentilles barreaux (6), est mise sous forme d'image au moyen des lentilles barreaux (6) et est incidente sur au moins une zone du réseau de pixels de ligne (7) photosensible,
dans lequel le réseau de pixels de ligne (7) photosensible comporte une pluralité de réseaux de pixels de lignes (7a, 7b) unidimensionnels, qui s'étendent respectivement le long de la direction transversale à la direction de transport (8) de l'objet (2), et sont disposés parallèlement les uns aux autres et côte à côte, dans lequel chaque réseau de pixels de ligne (7a, 7b) présente une longueur, transversalement à la direction de transport (8) de l'objet (2), qui couvre entièrement l'objet (2) à détecter, et
dans lequel la pluralité de réseaux de pixels de lignes (7a, 7b) unidimensionnels comporte :
- une première ligne de pixels de même taille,
- une deuxième ligne adjacente à celle-ci d'une séquence répétitive de pixels ayant des largeurs de pixels mutuellement différentes transversalement à la direction de transport (8), qui comporte un pixel ayant la largeur de pixel de deux pixels de la première ligne, un pixel ayant la largeur de pixel d'un pixel de la première ligne, un pixel ayant la largeur de pixel d'un pixel de la première ligne et un pixel ayant la largeur de pixel de deux pixels de la première ligne, et qui chevauche six pixels de la première ligne,
- une troisième ligne de pixels qui comporte des pixels ayant une largeur de trois pixels de la première ligne, de sorte que ceux-ci chevauchent respectivement depuis la deuxième ligne : un pixel ayant la largeur de pixel de deux pixels de la première ligne et un pixel ayant la largeur de pixel d'un pixel de la première ligne.

2. Dispositif selon la revendication 1, dans lequel chaque réseau de pixels de ligne (7a, 7b) comporte une pluralité de pixels (7a_1, 7a_2, 7b_1, 7b_2), et chaque pixel (7a_1, 7a_2, 7b_1, 7b_2) comporte au moins une photodiode de type CMOS ou CCD pour détecter une valeur de pixel de la lumière émise par la source lumineuse (4), et/ou dans lequel un nombre des réseaux de pixels de lignes (7a, 7b) est inférieur à un nombre des pixels (7a_1, 7a_2 ; 7b_1, 7b_2) dans chaque réseau de pixels de lignes (7a ; 7b).

3. Dispositif selon la revendication 1 ou 2, dans lequel des pixels provenant de différentes lignes peuvent être combinés au moyen d'un fusionnement analogique de telle sorte que des résolutions différentes peuvent être mises en œuvre.

4. Dispositif selon l'une des revendications précédentes, dans lequel le dispositif de commande (9) est en outre conçu pour attaquer la première ligne (7a) et la deuxième ligne (7b) indépendamment l'une de l'autre, et dans lequel le dispositif de commande (9) est conçu pour connecter la deuxième ligne (7b) à la première ligne (7a).

5. Dispositif selon l'une des revendications précédentes, dans lequel les pixels de la première ligne présentent une résolution de 600 dpi dans la direction transversale à la direction de transport (8),
- et, lorsqu'une résolution de 300 dpi doit être détectée, sont combinés au moyen d'un fusionnement analogique en une surface de pixels (12b) qui comporte des pixels de la deuxième ligne ;
- et, lorsqu'une résolution de 200 dpi doit être détectée, sont combinés au moyen d'un fusionnement analogique en une surface de pixels (12c) qui comporte des pixels des deuxième et troisième lignes.

6. Dispositif selon l'une des revendications précédentes, dans lequel un pixel de la pluralité de réseaux de pixels de lignes (7a, 7b) présente une taille de 127 micromètres par 127 micromètres.

7. Dispositif selon l'une des revendications précédentes, dans lequel la pluralité de réseaux de pixels de lignes (7a, 7b) unidimensionnels comporte une quatrième ligne de pixels ayant une largeur de pixel de six pixels de la première ligne, qui chevauchent respectivement deux pixels de la troisième ligne.

8. Dispositif selon la revendication 7, dans lequel la quatrième ligne présente une résolution de 100 dpi dans la direction transversale à la direction de transport (8) et, lorsqu'une résolution de 100 dpi doit être détectée, est combinée au moyen d'un fusionnement analogique en une surface de pixels (12d) qui comporte des pixels des deuxième, troisième et quatrième lignes.

9. Dispositif selon l'une des revendications 1 à 6, dans lequel le dispositif de commande (9) est en outre conçu
pour combiner des valeurs de pixels de deux pixels adjacents (7a_1, 7a_2) de la première ligne (7a) et au moins une valeur de pixel d'un pixel adjacent (7b_1, 7b_2) de la deuxième ligne (7b) au moyen d'un procédé de fusion analogique, et
pour fournir une valeur de pixel sur la base des valeurs de pixels combinées en vue d'un traitement ultérieur.

10. Dispositif selon l'une des revendications précédentes, dans lequel le dispositif de commande (9) est en outre conçu
pour activer les première et deuxième lignes (7a, 7b),
pour lire au moins une première valeur de pixel d'un premier pixel (7a_1) des premières lignes (7a) et une première valeur de pixel d'un premier pixel (7b_1) des deuxièmes lignes (7b),
pour lire au moins une deuxième valeur de pixel du deuxième pixel (7a_2) de la première ligne (7a) et une deuxième valeur de pixel du deuxième pixel (7b_2) des deuxièmes réseaux de lignes (7b),
et pour calculer respectivement une valeur moyenne au moyen d'un procédé d'acquisition de moyenne de ligne à partir des premières valeurs de pixels et des deuxièmes valeurs de pixels et pour fournir respectivement une valeur de pixel en vue d'un traitement ultérieur.

11. Dispositif selon l'une des revendications précédentes, dans lequel le dispositif (10) comporte au moins une deuxième source lumineuse (4a) pour éclairer l'objet (2), dans lequel la deuxième source lumineuse (4a) est disposée sur un côté opposé à la source lumineuse (4) par rapport à la pluralité de lentilles barreaux (6), et/ou les lentilles barreaux (6) sont des lentilles barreaux à gradient d'indice.

12. Dispositif selon l'une des revendications précédentes, dans lequel le dispositif (10) comporte une pluralité de rangées de lentilles barreaux (6) disposées en rangée,
dans lequel les rangées de lentilles barreaux (6) sont disposées parallèlement les unes aux autres, et
dans lequel les rangées sont respectivement disposées transversalement par rapport au dispositif de transport (8) .

13. Dispositif selon la revendication 12, dans lequel au moins une première rangée de la pluralité de rangées de lentilles barreaux (6) est disposée de manière adjacente à au moins une autre rangée de la pluralité de lentilles barreaux,
dans lequel la première rangée de lentilles barreaux (6) et l'autre rangée de lentilles barreaux sont disposées à une distance prédéfinie l'une de l'autre dans une direction transversale à la direction de transport de l'objet (2) et sont disposées de manière décalée l'une par rapport à l'autre d'une distance prédéfinie transversalement à la direction de transport (8), et/ou
au moins un espace intermédiaire entre une lentille barreau (6) et une lentille barreau (6) adjacente est rempli d'au moins un matériau de remplissage.

14. Procédé d'amélioration de la reproductibilité des enregistrements, le procédé comprenant :
la guidage d'au moins un objet (2) dans un plan objet (1a) au moyen d'un dispositif de guidage (1) ;
le transport de l'objet (2) dans le plan objet (1a) dans une direction de transport (8) au moyen d'au moins un dispositif d'entraînement (3) ;
l'éclairage de l'objet (2) au moyen d'au moins une source lumineuse (4) d'un capteur d'image de contact ;
la diffusion au moins partielle d'une lumière émise par la source lumineuse (4) depuis l'objet (2) vers une pluralité de lentilles barreaux (6) du capteur d'image de contact ;
la formation d'image d'au moins une partie de la lumière diffusée par l'objet (2) au moyen de la pluralité de lentilles barreaux (6) disposées entre le plan objet (1a) et un plan image (5) et en une rangée le long d'une direction transversale à la direction de transport (8) de l'objet (2), vers au moins un réseau de pixels de ligne (7) photosensible du capteur d'image de contact ;
la commande d'au moins la source lumineuse (4) et/ou du réseau de pixels de ligne (7) photosensible au moyen d'un dispositif de commande (9),
dans lequel le réseau de pixels de ligne (7) photosensible comporte une pluralité de réseaux de pixels de lignes (7a, 7b) unidimensionnels, qui s'étendent respectivement le long de la direction transversale à la direction de transport (8) de l'objet (2), et sont disposés parallèlement les uns aux autres et côté à côté, et
dans lequel chaque réseau de pixels de ligne (7a, 7b) présente une longueur, transversalement à la direction de transport (8) de l'objet (2), qui couvre entièrement l'objet (2) à détecter,
la détection d'au moins une partie de la lumière mise sous forme d'image par les lentilles barreaux (6) au moyen d'au moins une zone d'un réseau de pixels de ligne (7) photosensible qui est disposé dans le plan image (5), et
la combinaison d'au moins certaines valeurs de pixels individuelles de la pluralité de réseaux de pixels de lignes (7a, 7b) unidimensionnels et la fourniture d'une valeur de pixel en vue d'un traitement ultérieur au moyen du dispositif de commande (9),
dans lequel la pluralité de réseaux de pixels de lignes (7a, 7b) unidimensionnels comporte :
- une première ligne de pixels de même taille,
- une deuxième ligne adjacente à celle-ci d'une séquence répétitive de pixels ayant des largeurs de pixels mutuellement différentes transversalement à la direction de transport (8), qui comporte un pixel ayant la largeur de pixel de deux pixels de la première ligne, un pixel ayant la largeur de pixel d'un pixel de la première ligne, un pixel ayant la largeur de pixel d'un pixel de la première ligne et un pixel ayant la largeur de pixel de deux pixels de la première ligne, et qui chevauche six pixels de la première ligne,
- une troisième ligne de pixels qui comporte des pixels ayant une largeur de trois pixels de la première ligne, de sorte que ceux-ci chevauchent respectivement depuis la deuxième ligne : un pixel ayant la largeur de pixel de deux pixels de la première ligne et un pixel ayant la largeur de pixel d'un pixel de la première ligne.
